# EUROPÄISCHE PATENTSCHRIFT

(11) **EP 2 517 350 B1**
(45) Veröffentlichungstag und Bekanntmachung des Hinweises auf die Patenterteilung: **01.04.2015**
(21) Anmeldenummer: 10796067.6
(22) Anmeldetag: 22.12.2010
(51) Int. Cl.: H02P 9/10, H02P 9/48, H02P 9/30, H02P 25/18, H02P 25/22

(54) **VERFAHREN ZUR BEGRENZUNG DER STROMABGABE EINES ELEKTRISCHEN GENERATORS BEI HÖHERER DREHZAHL**
METHOD FOR LIMITING THE CURRENT OUTPUT OF AN ELECTRIC GENERATOR AT A HIGH ROTATIONAL SPEED
PROCÉDÉ DE LIMITATION DU DÉBIT DE COURANT D'UN GÉNÉRATEUR ÉLECTRIQUE À RÉGIME ÉLEVÉ

(30) Priorität: 22.12.2009 DE 102009055141
(43) Veröffentlichungstag der Anmeldung: 31.10.2012
(73) Patentinhaber: Robert Bosch GmbH, 70442 Stuttgart (DE)
(72) Erfinder: WOLF, Gert, 71563 Affalterbach (DE); HERZ, Michael, 70469 Stuttgart (DE); SUELZLE, Helmut, 71691 Freiberg (DE); MICKO, Andre, 74321 Bietigheim-Bissingen (DE)
(86) Internationale Anmeldenummer: PCT/EP2010/070529
(87) Internationale Veröffentlichungsnummer: WO 2011/080180

(56) Entgegenhaltungen:
- EP-A2- 1 063 764
- EP-A2- 1 292 010
- EP-A2- 1 544 018
- DE-A1-102007 005 742
- DE-A1-102007 058 910
- DE-C1- 19 733 208
- BAUSCH H ET AL: "Feed-forward control of current excited synchronous drives // Controle par avance de phase d'un entrainement synchrone alimente en courant", ICEM '94, CONFÉRENCE INTERNATIONALE SUR LES MACHINES ÉLECTRIQUES, INTERNATIONAL CONFERENCE ON ELECTRICAL MACHINES, 5 - 8 SEPTEMBRE/SEPTEMBER 1994, PALAIS DES CONGRÈS, PARIS, FRANCE, SOCIÉTÉ DES ÉLECTRICIENS ET DES ÉLECTRONICIENS, PARIS; THE INSTITUTI, Bd. 1, 5. September 1994 (1994-09-05), Seiten 220-225, XP002669654,

## Beschreibung

### Stand der Technik

Die Erfindung betrifft elektrische Maschinen, die als Generatoren betrieben werden, insbesondere Wechselstromgeneratoren, die zur Stromerzeugung im Kraftfahrzeugbereich verwendet werden sowie deren Steuerung. Prinzipiell wären auch Gleichstrommaschinen geeignet.

Solche elektrische Generatoren werden vom Verbrennungsmotor beispielsweise über Keilriemen angetrieben und weisen anwendungsbedingt stark veränderliche Generatordrehzahlen auf, wobei der erzeugte Ausgangsstrom des Generators bzw. die entstehende Generatorausgangsspannung vorzugsweise geregelt ist, so dass beispielsweise die Generatorausgangsspannung trotz ihrer Drehzahlabhängigkeit gemäß einer konstanten Sollvorgabe geregelt wird und der Generatorstrom vorzugsweise trotz veränderlicher Drehzahl bestimmte Eigenschaften aufweist.

Zur Steuerung bzw. Regelung der Ausgangsleistung des Generators, insbesondere der Ausgangsspannung und des Ausgangsstroms wird das Erregerfeld durch gesteuerte Bestromung der Erregerwicklung variiert. Zur Bestromung der Erregerwicklung wird ein Teil der vom Generator erzeugten Ausgangsleistung von den Generatorwicklungsklemmen über eine Steuerung, beispielsweise eine pulsweitenmodulierte Stromsteuerung an die Erregerwicklung zurückgeführt.

Aus der EP 1292 010 A2 ist eine Schutzvorrichtung für einen Generator bekannt.

Aus der EP 1 544 018 A2 ist eine Vorrichtung zum Bestimmen der Ausgangsleistung eines Generators bekannt.

Aus Bausch H. et al., "Feed-forward control of current excited synchronous drives", ICEM '94, International Conference on Electrical Machines, 5-8, September 1994, Palais des Congres, Paris, France, Societe des electriciens et des électroniciens, Paris; The Institui, Bd. 1, 5. September 1994, Seiten 220-225, XP002669654 ist ein Verfahren zur Momentenkoritrolle stromerregter Synchronmaschinen bekannt.

Aus der EP 1 063 764.A2 ein Generatorregler bekannt, der Ausgangsspannung und Ausgangsstrom regelt.

Es ist bekannt, dass Wechselstromgeneratoren, insbesondere Drehstromgeneratoren bei hohen Drehzahlen und damit hohen Ausgangsströmen beträchtliche Wärmeentwicklung aufweisen, die zu einer Überhitzung und zur Zerstörung wärmeempfindlicher Bauteile führen kann. Es ist dabei bekannt, die Wärmeentwicklung durch Beschränkung des Erregerstroms bei vorgebbaren Bedingunger zu beschränken. Aus der EP 0 462 503 B1 ist dabei bekannt, den Erregerstroms bei Erreichen einer vorgebbaren Temperaturschwelle zu beschränken. In der DE 38 43 163 A1 wird unter anderem vorgeschlagen, den Erregerstrom bei Erreichen einer vorgebbaren Drehzahlschwelle zu verringern, um eine Überhitzung durch zu hohe Leistungsabgabe des Generators zu vermeiden.

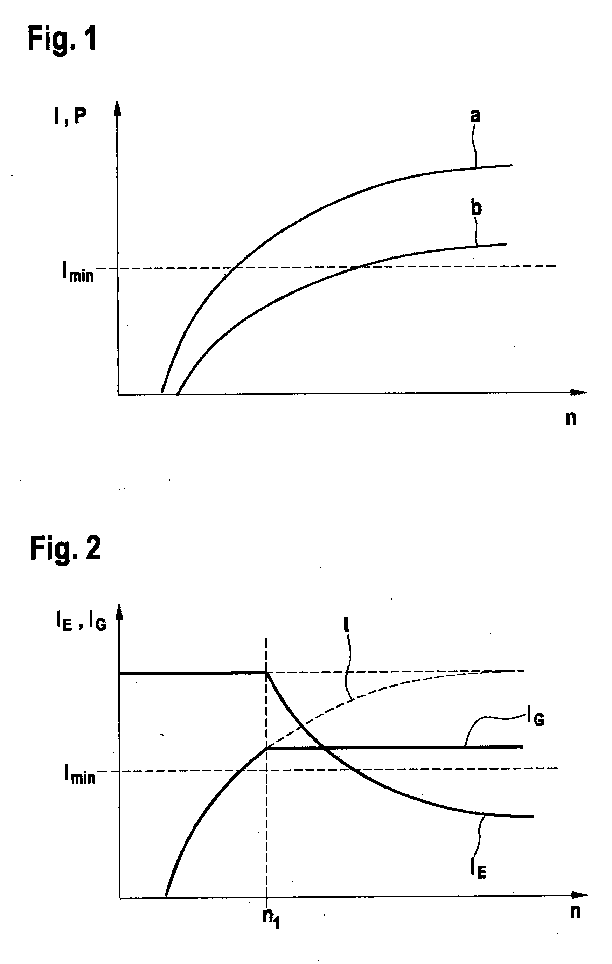

Der maximal abzugebende Strom bzw. die maximal abzugebende Leistung eines Generators, insbesondere eines Wechselstromgenerators ist von der Konstruktion, der elektrischen Auslegung des Ständers und Läufers, von der Temperatur, dem Erregerstrom, der Generatorspannung und anderen Größen abhängig. Darüber hinaus ist dieser Strom bzw. diese Leistung auch von der Generatordrehzahl abhängig und nimmt mit steigender Generatordrehzahl zu. In der Figur 1 ist der Abgabestrom I_{G} einer als Generator arbeitenden elektrischen Maschine für verschiedene Maschinenspezifikationen bzw. Maschinenauslegungen in den Verläufen a und b über der Generatordrehzahl n aufgetragen.

Da der Abgabestrom I_{G} bei konstanter Generatorspannung proportional zu der Generatorleistung P ist (P = U * I_{G} ), kann die Figur 1 auch als Verlauf der abgegebenen Generatorleistung P über der Drehzahl angesehen werden. Der Verlauf a wird bei einer ersten Maschinenspezifikation bzw. Maschinenauslegung erhalten, die einen insgesamt höheren Generatorstrom zulässt als eine Maschinenauslegung, die zu einem Verlauf b führt.

Bei einem Generator, der in einem Fahrzeug eingesetzt werden soll, ist der Stromwert bei niedrigen Generatordrehzahlen, beispielsweise im Leerlauf des Fahrzeugmotors, der auch den Generator antreibt, besonders wichtig, damit auch bei geringen Generatordrehzahlen bzw. sinkendem Drehzahlkollektiv das Bordnetz versorgt und die Starterbatterie des Fahrzeugs noch geladen werden kann. Hierzu ist ein Minimalstrom Iₘᵢₙ erforderlich, der für eine nicht negative Leistungsbilanz innerhalb eines Bordnetzes benötigt wird.

Bei einer Maschinenauslegung, die zum Stromabgabeverlauf a führt, wird der Minimalstrom Iₘᵢₙ bei niedrigerer Drehzahl erreicht, als bei einer Maschinenauslegung, die zum Stromabgabeverlauf b führt. Daraus folgt, dass die Maschinenauslegung nach a für niedrigere Drehzahlkollektive geeignet ist als die Maschinenauslegung b.

Wie der Figur 1 zu entnehmen ist, liefert bei höherer Drehzahl die Maschinenauslegung, die zum Stromabgabeverlauf a führt ebenfalls höhere Ströme als die Maschinenauslegung nach b, sofern die Summe der elektrischen Last im Bordnetz, also die Standard-Verbraucher, nachträglich eingebaute Verbraucher, defekte Verbraucher und die Batterie dies erfordert.

Üblicherweise sind die Komponenten Gleichrichterdioden zur Gleichrichtung der Generatorausgangsspannung bzw. des Generator Abgabestroms I_{G} und Leitungsquerschnitt der Verkabelungen, die für einen Generator benötigt werden, für die zu erwartenden Ströme, insbesondere Maximalströme dimensioniert. Die Folge davon ist, dass für die Maschinenauslegung, die zu einem Verlauf des Generator Abgabestroms I_{G} nach a führt, mit einem höheren Maximalstrom als bei b gerechnet werden muss und somit eine kostenaufwändigere und schwerere Dimensionierung erforderlich wäre. Würden die Komponenten dagegen nur für kleinere Ströme dimensioniert, könnte das im Fall nach a zur Zerstörung durch Überlast führen.

### Offenbarung der Erfindung

Der Vorteil der Erfindung ist darin zu sehen, einen Steuerungs- bzw. Regelungsmechanismus vorzusehen, mit dem der Betrieb einer elektrischen Maschine als Generator so optimiert werden kann, dass im Bereich kleiner Generatordrehzahlen ein möglichst großer Generatorstrom abgegeben wird und im Bereich hoher Drehzahlen eine Abgabestrombegrenzung so erhalten wird, dass temperaturkritische Generatorbauteile nicht gefährdet werden und maximal zulässige Bauteilströme nicht überschritten werden. Erzielt wird dieser Vorteil durch ein Verfahren oder eine Vorrichtung zur Regelung einer elektrischen Maschine mit einer Erregerwicklung, die als Generator betrieben wird und die Merkmale der unabhängigen.Ansprüche umfasst.

Die erfindungsgemäßen Verfahren zur Beschränkung des Abgabestroms, der von einer als Generator betriebenen elektrischen Maschine erzeugt wird sowie die zugehörigen Vorrichtungen haben den weiteren Vorteil, dass durch Beeinflussen des durch die Erregerwicklung fließenden Erregerstroms mittels einer Vorrichtung zur Spannungsregelung der Abgabestrom so begrenzt werden kann, dass er eine Abgabestrom-Obergrenze nicht überschreitet. In besonders vorteilhafter Weise wird dabei aus einem Kennfeld anhand des Sollwertes des maximalen Generatorabgabestroms, einer Generatordrehzahl und einer Generatorspannung ein maximal zulässiger Erregerstrom ermittelt wird und der Erregerstrom auf diesen maximalen Erregerstrom begrenzt.

Eine weitere vorteilhafte Ausgestaltung der Erfindung ist, dass beginnend einer Generatordrehzahl, die einer ersten Drehzahl entspricht, der Erregerstrom auf seinen Maximalwert begrenzt wird und der Erregerstrom bei höheren Drehzahlen auf seinem Maximalwert begrenzt bleibt. In besonders vorteilhafter Weise wird ein Tastverhältnis zur Regelung des Erregerstroms gebildet ist wobei der Erregerstrom verringert wird durch Verringerung des Tastverhältnisses mit dem der Erregerstrom ein- oder ausgeschaltet wird. Das maximale Tastverhältnis zur Regelung des Erregerstroms wird dabei aus dem ermittelten maximal zulässigen Erregerstrom und einer Temperatur ermittelt, wobei das Tastverhältnis dann auf dieses maximale Tastverhältnis begrenzt wird.

Ein weiterer Vorteil der Erfindung ist darin zu sehen, dass die Temperatur mittels eines Temperatursensors ermittelt wird, wobei der Temperatursensor die Temperatur innerhalb des Spannungsreglers misst oder die Umgebungstemperatur oder die Temperatur vorgebbarer Komponenten, insbesondere wichtiger Komponenten des Gleichrichters oder des Stators misst. Von Vorteil ist auch, dass die Beschränkung des Abgabestroms durch entsprechende Beschränkung des Erregerstroms nach einer drehzahlabhängigen Kennlinie oder einem entsprechenden Kennfeld erfolgt. Die benötigten Kennlinien oder Kennfelder sind im Spannungsregler oder in einem Steuergerät hinterlegt, wobei der maximale Erregerstrom auch mittels einer Look-up-Tabelle oder mitttels einer Näherungsformel ermittelt werden kann.

In vorteilhafter Weise kann der reale Verlauf des begrenzten Erregerstroms beim Wechsel oder beim Übergang zwischen Begrenzungswerten gestuft oder als Rampe mit einem vorgebbaren zeitlichen Verlauf realisiert werden und insbesondere so erfolgen, dass keine Sprünge des Erregerstroms auftreten. Die Änderungsgeschwindigkeit und/oder die zeitlichen Verläufe der Erregerströme können steigend und fallend unterschiedlich sein.

Besonders vorteilhaft ist, dass die Generatordrehzahl, oberhalb der die Erregerstrombegrenzung erfolgt, variabel ist und insbesondere beim ersten Hochfahren des Generators ermittelt und in einen Speicher eingeschrieben werden kann. Benötigte Informationen können zwischen dem Spannungsregler und einem Steuergerät, insbesondere dem Motorsteuerung bidirektional ausgetauscht werden.

Weitere Vorteile sind, dass die Maschinenauslegung unter Berücksichtigung der erlaubten Abgabestrom-Obergrenze erfolgen kann, dass die Generatorstrombegrerizung außer Kraft gesetzt wird oder um einen vorgebbaren Betrag erhöht wird, wenn ein minimaler Generatorspannungswert erreicht oder, unterschritten wird und dass der Sollwert des maximal zulässigen Generatorabgabestroms anhand von ermittelten Temperaturwerten durch den Spannungsregler oder das Steuergerät gegebenenfalls reduziert wird.

Vorteilhafte Vorrichtungen zur Beschränkung des Abgabestroms, der von einer elektrischen Maschine mit Erregerwicklung erzeugt wird, mit einem Spannungsregler zur Beeinflussung des durch die Erregerwicklung fließenden Erregerstroms, so dass der Abgabestrom eine Abgabestrom-Obergrenze nicht überschreitet, umfassen Speichermittel, in denen wenigstens ein Kennfeld abgelegt ist, das den Sollwert des maximalen Generatorabgabestroms, Generatordrehzahlen, eine Generatorspannung und einen maximal zulässiger Erregerstrom zu einander in Beziehung setzt. Dazu sind Mittel vorhanden, zur Begrenzung des Erregerstrom auf den maximal zulässigen Erregerstrom.

In vorteilhafter weise sind weiterhin Mittel zur Bildung eines. Tastverhältnisses zur Regelung des Erregerströms vorhanden, die den Erregerstrom verringern durch Verringerung eines Tastverhältnisses, mit dem der Erregerstrom geschaltet wird. Weitere Vorteile werden erhalten, wenn weitere Mittel vorhanden sind, die das maximale Tastverhältnis zur Regelung des Erregerstroms aus dem ermittelten maximal zulässigen Erregerstrom und einer Temperatur bestimmen und das Tastverhältnis auf dieses maximale Tastverhältnis ) begrenzen.

Besonders vorteilhaft ist, dass die erfindungsgemäßen Vorrichtungen zur "Beschränkung des Abgabestroms bei verschiedenen elektrischen Maschinen eingesetzt werden können, insbesondere auch solchen mit beliebigen Phasenzahlen und/oder beliebigen Verschaltungsarten, insbesondere bei dreiphasigen Maschinen mit Wicklüngsanordnung in Stern oder Dreieck oder zwei mal dreiphasigen Anordnungen in Stern oder Dreieck.

### Kurze Beschreibung der Figuren

Ausführungsbeispiele der Erfindung sind in den Zeichnungen dargestellt und in der nachfolgenden Beschreibung näher erläutert.

Es zeigen:
- Figur 1: typische Verläufe von Generatorabgabestrom und Generatorleistung über der Generatordrehzahl für zwei Generatorauslegungen;
- Figur 2: den Verlauf des Erregerstroms und des Generatorabgabestroms bei erfindungsgemäßer Beschränkung in Abhängigkeit von der Drehzahl;
- Figur 3: Begrenzung des Erregerstroms über der Generatordrehzahl in Stufen gemäß einer ersten Ausführung der Erfindung;
- Figur 4: den Verlauf des Erregerstroms über der Generatordrehzahl in Rampen gemäß einer zweiten Ausführungsform der Erfindung;
- Figur 5: einen Längsschnitt durch einen Wechselstromgenerator für Kraftfahrzeuge mit einem Klauenpolrotor als Ausführungsform einher elektrischen Maschine für die die erfindungsgemäße Drehzahlbegrenzung durchgeführt werden kann;
- Figuren 6-10: Schaltbilder von Ausführungsformen, in welchen die Erfindung umgesetzt werden kann und die eine Brückenschaltung eines 5-phasigen Stators in einer Anordnung als fünfzackigem Stern mit erfindungsgemäßer Strombegrenzung umfassen;
- Figuren 11a-11c: eine Darstellung der Generatorstrombegrenzung, Tastverhältnisbegrenzung und Erregerstrombegrenzung über der Generatordrehzahl; und
- Figuren 12a-d, 13: eine Darstellung verschiedener Möglichkeiten zur Generatorstrombegrenzung in Blockschaltbilddarstellung.

Der maximal abzugebende Strom bzw. die maximal abzugebende Leistung eines Generators, insbesondere eines Wechselstromgenerators ist von der Konstruktion, der elektrischen Auslegung des Ständers und Läufers, von der Temperatur, dem Erregerstrom, der Generatorspannung und anderen Größen abhängig. Darüber hinaus ist dieser Strom bzw. diese Leistung auch von der Generatordrehzahl abhängig und nimmt mit steigender Generatordrehzahl zu. In der Figur 1 ist der Abgabestrom I_{G} einer als Generator arbeitenden elektrischen Maschine für verschiedene Maschinenspezifikationen bzw. Maschinenauslegungen in den Verläufen a und b über der Generatordrehzahl n aufgetragen.

Da der Abgabestrom I_{G} bei konstanter Generatorspannung proportional zu der Generatorleistung P ist (P = U * I_{G} ), kann die Figur 1 auch als Verlauf der abgegebenen Generatorleistung P über der Drehzahl angesehen werden. Der Verlauf a wird bei einer ersten Maschinenspezifikation bzw. Maschinenauslegung erhalten, die einen insgesamt höheren Generatorstrom zulässt als eine Maschinenauslegung, die zu einem Verlauf b führt.

Bei einem Generator, der in einem Fahrzeug eingesetzt werden soll, ist der Stromwert bei niedrigen Generatordrehzahlen, beispielsweise im Leerlauf des Fahrzeugmotors, der auch den Generator antreibt, besonders wichtig, damit auch bei geringen Generatordrehzahlen bzw. sinkendem Drehzahlkollektiv das Bordnetz versorgt und die Starterbatterie des Fahrzeugs noch geladen werden kann. Hierzu ist ein Minimalstrom Iₘᵢₙ erforderlich, der für eine nicht negative Leistungsbilanz innerhalb eines Bordnetzes benötigt wird.

Bei einer Maschinenauslegung, die zum Stromabgabeverlauf a führt, wird der Minimalstrom Iₘᵢₙ bei niedrigerer Drehzahl erreicht, als bei einer Maschinenauslegung, die zum Stromabgabeverlauf b führt. Daraus folgt, dass die Maschinenauslegung nach a für niedrigerere Drehzahlkollektive geeignet ist als die Maschinenauslegung b.

Wie der Figur 1 zu entnehmen ist, liefert die Maschinenauslegung, die zum Stromabgabeverlauf a führt, bei höherer Drehzahl ebenfalls höhere Ströme als die Maschinenauslegung, die zum Stromabgabeverlauf b führt, sofern die Summe der elektrischen Last im Bordnetz, also die Standard-Verbraucher, nachträglich eingebaute Verbraucher, defekte Verbraucher und die Batterie dies erfordern.

Üblicherweise sind die Komponenten Gleichrichterdioden zur Gleichrichtung der Generatorausgangsspannung bzw. des Generator Abgabestroms I_{G} und der Leitungsquerschnitt der Verkabetungen, die für einen Generator benötigt werden, für die zu erwartenden Ströme, insbesondere Maximalströme dimensioniert. Die Folge davon ist, dass für die Maschinenauslegung, die zu einem Verlauf des Generatorabgabestroms I_{G} nach a führt, mit einem höheren Maximalstrom als bei b gerechnet werden muss und somit eine kostenaufwändigere und schwerere Dimensionierung erforderlich ist, als bei einer Maschinenauslegung, die zum Stromabgabeverlauf b führt. Würden die Komponenten dagegen nur für kleinere Ströme dimensioniert, könnte das im Fall nach a zur Zerstörung durch Überlast führen.

Die Figur 2 zeigt den Verlauf des Erregerstroms I_{E} sowie den Verlauf des zugehörigen Abgabestroms I_{G}, der vom Generator abgegeben wird in Abhängigkeit von der Drehzahl n. Für Drehzahlen unterhalb der Drehzahlgrenze n1 wird der Erregerstrom nicht begrenzt d.h. das Tastverhältnis kann bei Volllast des Generators 100 % betragen. Der Abgabestrom I_{G} des Generators steigt bis zum Erreichen des vorgebbaren Maximalstroms I_{GMAX} drehzahlabhängig an.

Wird der Erregerstrom aus der geregelten Ausgangsspannungsschiene des Generators abgeleitet, kann die mit I_{E} bezeichnete Kurve auch als Wert des Erregerstrom-Tastverhältnis angesehen werden. Dabei ist das Tastverhältnis bis zur Drehzahl n1 gleich 1, es wird also der maximal mögliche Erregerstrom durch die Erregerwicklung fließen. Ein Tastverhältnis von 1 bedeutet, dass der Regeltransistor dauernd leitet und 0 bedeutet, dass der Regeltransistor dauernd sperrt. Ab der Drehzahlgrenze n1, die ebenso die Stelle angeben kann, an der der Abgabestrom die Abgabestrom-Obergrenze erreicht, wird der Erregerstrom verringert, wie es durch die ab n1 abfallende Kurve von I_{E} dargestellt ist.

Durch die an eine Kennlinie angepasste Verringerung des Erregerstroms mit zunehmender Drehzahl ergibt sich ein ab der Drehzahl n1 ein näherungsweise konstanter Abgabestrom I_{G}, der über einem Minimalstrom Iₘᵢₙ liegt, und der vorzugsweise der Abgabestrom-Obergrenze entspricht. Dadurch ist gewährleistet, dass auch oberhalb der Drehzahlgrenze n1 der Abgabestrom nicht über die Abgabestrom-Obergrenze steigt, so dass alle der elektrischen Maschine nachgeschalteten Leistungselemente gemäß dieser Obergrenze ausgelegt werden können.

Die ab dem Drehzahlwert n1 fortgeführte gestrichelte Linie I entspräche dem Verlauf des Abgabestroms I_{G}, wenn der Erregerstrom konstant gehalten würde und sich die Drehzahl erhöht. Es ist zu erkennen, dass in diesem Fall der Abgabestrom I_{G} bei Zuschaltung entsprechender Bordnetzlasten deutlich über den Minimalstrom ansteigen würde, aber auch Abgabestrom-Obergrenze für hohe Drehzahlen steigen würde. Dies wird erfindungsgemäß vermieden.

Es ist zu erkennen, dass für die die Maschinenauslegung, die zum Stromabgabeverlauf b führt, eine höhere Drehzahl n notwendig ist, um den Minimalstrom Iₘᵢₙ zu erzeugen, als für die die Maschinenauslegung, die zum Stromabgabeverlauf b führt.

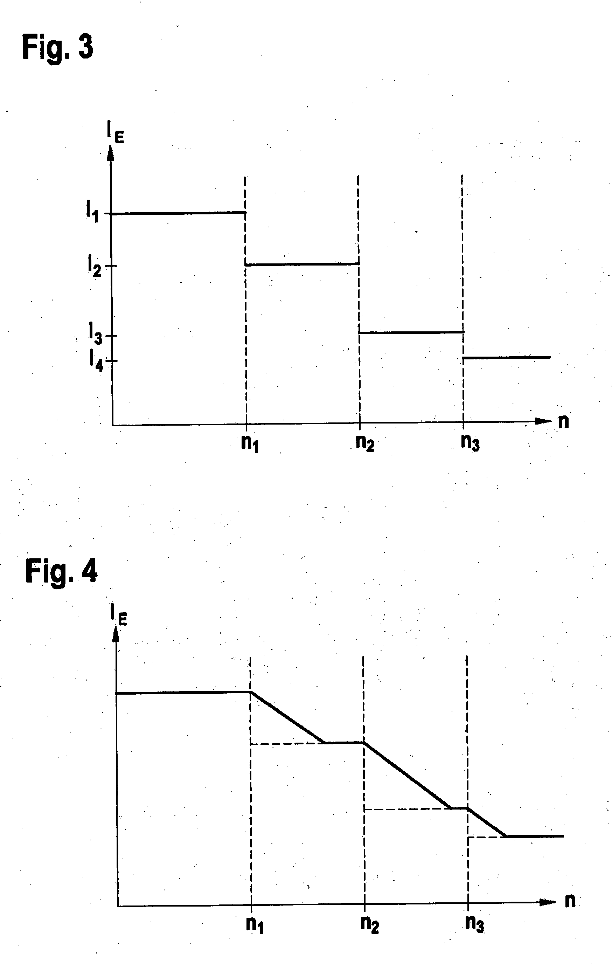

Die Figur 3 zeigt eine mögliche Absenkung des maximal zulässigen Erregerstroms I_{E} abhängig von der Drehzahl n in Stufen. Der dargestellte Verlauf kann als Kennlinie angesehen werden, die zur Beschränkung des Generatorabgabestroms I_{G} bei Erreichen der Abgabestrom-Obergrenze dient. Bis zur Drehzahl n1 wird der Erregerwicklung ein Erregerstrom I₁ zugeführt und bei Drehzahlen oberhalb der Drehzahl n1 wird der Erregerstrom auf I₂ verringert. Ab einer Drehzahl n2 wird der Erregerstrom weitergehend auf I₃ verringert. Ab der Drehzahl n3 wird der Erregerstrom ein weiteres Mal verringert auf den Erregerstrom I₄, der kleiner als die Ströme I₁ bis I₃ ist. Auf diesen Wert wird der Erregerstrom begrenzt um sicher zu stellen, dass der Generatorabgabestrom den vorgegebenen Maximalwert nicht übersteigt.

Vorzugsweise werden die einzelnen Drehzahlgrenzen n1-n3, die auch als Eingriffsdrehzahlen bezeichnet werden können, zusammen mit den zugehörigen Strömen I₂, I₃ und I₄ die nach den jeweiligen Drehzahlgrenzen vorgesehen werden, derart gewählt, dass am Ende des vor n1 liegenden Drehzahlintervalls bei I₁ und im Wesentlichen bei n1 die Abgabestrom-Obergrenze erreicht ist, sowie auch bei der Drehzahl n2 mit dem Erregerstrom I₂ die Abgabestrom-Obergrenze erreicht ist, und ebenso bei der Drehzahl n3 der Erregerstrom I₃ zu der Abgabestrom-Obergrenze führt. Mit anderen Worten liegen die Eckpunkte der in Figur 3 dargestellten Stufenfunktion (I₁/n1, I₁/n2, I₃/n3) auf einer Kennlinie, die den Verlauf des benötigten Erregerstroms abhängig von der Drehzahl darstellt, der zu einem Abgabestrom führt, der näherungsweise konstant der Abgabestrom-Obergrenze I_{GMAX} entspricht.

In Figur 4 ist Verlauf des maximal zulässigen Erregerstroms abhängig von der Drehzahl n dargestellt, wobei anstatt eines stufenförmigen Verlaufs der Erregerstromabsenkung zumindest teilweise ein linearer Verlauf vorliegt. Oberhalb der Drehzahlgrenzen n1, n2 und n3 sind lineare Verläufe vorgesehen, mit sinkenden Werten für den Erregerstrom mit zunehmender Drehzahl. Beispielsweise wird die gleiche negative Steigung gewählt, die sich über einen wählbaren Bereich des jeweiligen Drehzahlintervalls erstreckt. Die Drehzahlbereichsabhängige Verringerung des Erregerstroms gemäß der Kennlinie nach Figur 4 führt zu einer Abweichung des Abgabestroms von der Abgabestrom-Obergrenze, die kleiner ist als bei dem stufenförmigen Übergang, wie er in Figur 3 dargestellt ist. Anstatt oder in Kombination mit dem rampenförmigen Verlauf mit der Drehzahl, wie es in Figur 4 dargestellt ist, kann die Verringerung des Erregerstroms auch abhängig von der Zeit, wie in Figur 4 dargestellt, rampenförmig erfolgen, wenn eine Drehzahlgrenze überschritten wurde.

Der Sollwert des maximal zulässigen Generatorstromes I_{Gmax} kann anhand von Temperaturwerten durch den Regler oder das Steuergerät reduziert werden. Hierdurch wird ein weiter verbesserter Übertemperaturschutz für die Komponenten des Generators realisiert.

Es ist vorteilhaft, wenn bei Auftreten eines minimalen Generatorspannungswerts bzw. wenn dieser unterschritten wird, die Generatorstrombegrenzung außer Kraft gesetzt wird oder um einen bestimmten Betrag verändert, insbesondere erhöht wird. Das Auftreten des minimalen Generatorspannungswertes deutet auf eine schlechte Bordnetzversorgung bzw. auf eine defekte Batterie hin. Durch die vorstehend genannte Maßnahme wird eine bessere Versorgung des Bordnetzes in ungünstigen Situationen gewährleistet.

Die Eingriffsdrehzahlen bzw. Drehzahlgrenzen n1, n2 und n3 müssen nicht fest vorgegeben sein, sondern können im laufenden Betrieb geändert werden. Dazu werden die Eingriffsdrehzahlen in Abhängigkeit von der Generatorspannung Ug und/oder vom maximalen Generator Abgabestrom Igmax) ermittelt, so dass gilt: n1, n2, n3 = f (Ug, Igmax). Die Eingriffsdrehzahlen n1, n2, n3 können somit je nach vorgegebenem maximal zulässigem Generator Abgabestrom und je nach aktueller Generatorspannung varüeren. Der Generator Abgabestrom kann beispielsweise aus der Drehzahl n und dem Erregerstrom mittels eines Kennfeldes ermittelt werden. Dabei wird auch ein Stromschwellwert bzw. ein maximaler Generator Abgabestrom festgelegt.

Die Eingriffsdrehzahlen bzw. Drehzahlgrenzen n1, n2 und n3 können auch beispielsweise beim erstmaligen Hochfahren bzw. bei der Inbetriebnahme des Generators bestimmt werden. Bei einem entsprechend ausgestatteten Generatorsystem kann der maximal zulässige Generator Abgabestrom Igmax über eine externe Schnittstelle zugeführt werden und von einer externen Logik, beispielsweise von einem Steuergerät eines Fahrzeugs stammen.

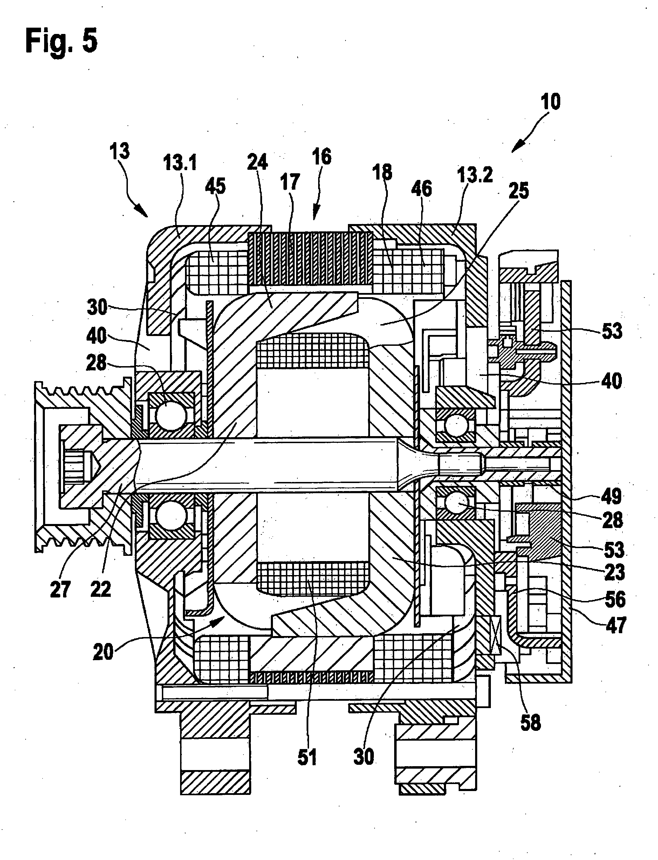

In Fig. 5 ist ein Schnitt durch einen Wechselstromgenerator 10 für Kraftfahrzeuge dargestellt. Bei einem solchen Wechselstromgenerator kann die erfindungsgemäße Begrenzung des Generatorausgangsstroms eingesetzt werden. Der Wechselstromgenerator 10 weist dabei unter anderem ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen Stator 16 auf, mit einem kreisringförmigen Blechpaket 17, in dessen nach innen offene und sich axial erstreckende Nuten 19 eine Statorwicklung 18 eingelegt ist. Der ringförmige Stator 16 umgibt mit seiner radial nach innen gerichteten Oberfläche einen elektromagnetisch erregten Rotor 20, der als Klauenpolläufer ausgebildet ist. Der Rotor 20 besteht unter anderem aus zwei Klauenpolplatinen 22 und 23, an deren Außenumfang sich jeweils in axialer Richtung erstreckende Klauenpolfinger 24 und 25 angeordnet sind. Beide Klauenpolplatinen 22 und 23 sind im Rotor 20 derart angeordnet, dass ihre sich in axialer Richtung erstreckenden Klauenpolfinger 24, 25 am Umfang des Rotors 20 einander als Nord- und Südpole abwechseln. Es ergeben sich dadurch magnetisch erforderliche Klauenpolzwischenräume zwischen den gegensinnig magnetisierten Klauenpolfingern 24 und 25, welche wegen der sich zu ihrem freien Enden hin verjüngenden Klauenpolfinger 24 und 25 leicht schräg zur Maschinenachse verlaufen.

Für die folgende Beschreibung der Ausführungsbeispiele der Erfindung und in den Ansprüchen ist dieser Verlauf vereinfacht als axial bezeichnet. Der Rotor 20 ist mittels einer Welle 27 und je einem auf je einer Rotorseite befindlichen Wälzlager 28 in den jeweiligen Lagerschilden 13.1 beziehungsweise 13.2 drehbar gelagert. Erweist zwei axiale Stirnflächen auf, an denen jeweils ein Lüfter 30 befestigt ist. Diese Lüfter 30 bestehen im Wesentlichen aus einem plattenförmigen beziehungsweise scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der. Außenseite und dem Innenraum der elektrischen Maschine 10 zu ermöglichen. Dazu sind die Öffnungen 40 an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 radial nach außen beschleunigt, so dass sie durch die kühlluftdurchlässigen Wickelköpfe 45 auf der Antriebsseite und 46 auf der Elektronikseite hindurch treten kann. Durch diesen Effekt werden die Wickelköpfe 45, 46 gekühlt. Die Kühlluft nimmt nach dem Hindurchtreten durch die Wickelköpfe 45, 46, beziehungsweise nach dem Umströmen dieser Wickelköpfe 45, 46 einen Weg radial nach außen durch ihn nicht dargestellten Öffnungen.

In Figur 5 auf der rechten Seite befindet sich eine Schutzkappe 47, die verschiedene Bauteile vor Umgebungseinflüssen schützt. So deckt diese Schutzkappe 47 beispielsweise eine Schleifringbaugruppe 49 ab, die eine Erregerwicklung 51 mit Erregerstrom versorgt. Um diese Schleifringbaugruppe 49 herum ist ein Kühlkörper 53 angeordnet, der hier als Pluskühlkörper wirkt, an dem Plusdioden 59 montiert sind. Als so genannter Minuskühlkörper wirkt das Lagerschild 13.2. Zwischen dem Lagerschild 13.2 und dem Kühlkörper 53 ist eine Anschlussplatte 56 angeordnet, welche im Lagerschild 13.2 befestigte Minusdioden 58 und in dieser Darstellung nicht gezeigte Plusdioden 59 im Kühlkörper 53 in Form einer Brückenschaltung 29 miteinander verbindet.

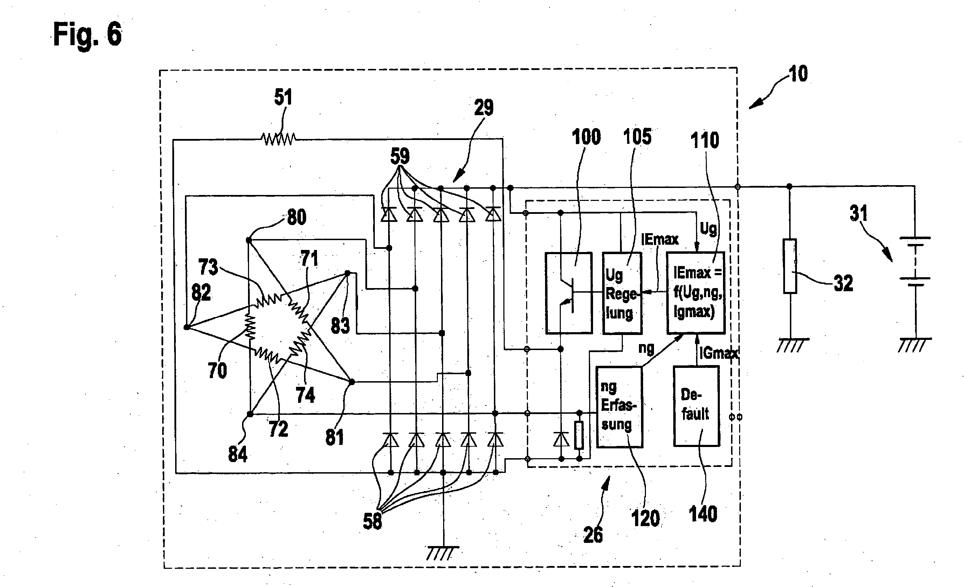

In Figur 6 ist eine zur Umsetzung der Erfindung geeignete elektrische Maschine bzw. eines Wechselstromgenerators in Form eines Schaltbildes einer Brückerischaltung eines 5-phasigen Stators in einer Anordnung als fünfzackiger Stern mit erfindungsgemäßer Begrenzung des Abgabestroms I_{G} dargestellt. Dabei umfasst das Schaltbild auch einen Gleichrichter und eine Regelungsvorrichturig, die vorzugsweise zur Umsetzung der Erfindung verwendet wird. Für sich entsprechende Elemente aus Figur 5-werden in Figur 6 die gleichen Bezugszeichen verwendet.

Im Einzelnen zeigt Figur 6 einen Wechselstromgenerator 10 mit fünf phasenbildenden Wicklüngssträngen 70, 71, 72, 73, 74. Die Gesamtheit aller Wicklungsstränge 70, 71, 72, 73, 74 bildet die Ständervvicklung 18. Die fünf phasenbildenden Wicklungsstränge 70, 71, 72, 73, 74 sind zu einer Grundschaltung als fünfzackiger Stern (Drudenfuß) verschaltet, wobei die jeweils in den Zacken des Sterns verschalteten Stränge einen Winkel von ca. 36° el. einschließen. An den Verschaltüngspunkten der Zacken 80, 81, 82, 83, 84 des fünfzackigen Sterns ist die Gleichrichterbrüdkenschaltung 29 angeschlossen. Die Wicklungsstränge sind wie folgt verschaltet. Der Wicklungsteilstrang 70 ist am Verschaltungspunkt80 mit dem Wicklungsteilstrang 71 verbunden. Der Wicklungsstrang 71 ist an seinem gegenüberliegenden Ende am Verschaltungspunkt 81 mit dem Wicklungsstrang 72 verbunden.

Der Wicklungsstrang 72 ist an seinem gegenüberliegenden Ende am Verschaltungspunkt 82 mit dem Wicklungsstrang 73 verbunden. Der Wicklungsteilstrang 73 ist an seinem gegenüberliegenden Ende am Verschaltungspunkt 83 mit dem Wicklungsstrang 74 verbunden. Der Wicklungsstrang 74 ist an seinem gegenüberliegenden Ende am Verschaltungspunkt 84 mit dem Wicklungsstrang 70 verbunden. Die Verschaltungspunkte befinden sich vorzugsweise axial auf oder neben dem elektronikseitigen Wickelkopf 46 um möglichst kurze Verschaltungswege zu realisieren. Hierzu treten die jeweils zu verschaltenden Anschlussdrähte der Wicklungsstränge 70, 71, 72, 73, 74 eines Verschaltungspunktes 80, 81, 82, 83, 84 vorzugsweise aus in Umfangsrichtung direkt benachbarten Nuten 19 aus. Die Verschaltungspunkte 80, 81, 82, 83, 84 der Wicklungsstränge 70, 71, 72, 73, 74 sind mit einem separaten Brückengleichrichter 29 verbunden, der aus fünf Minusdioden 58 und fünf Plusdioden 59 aufgebaut ist.

Gleichspannungsseitig ist ein Spannungsregler 26 parallel geschaltet, der durch Beeinflussung des Stromes durch die Erregerwicklung 51 die Spannung des Generators regelt. Der Spannungsregler 26 weist eine Vorrichtung 120 zur Erfassung der Frequenz der in den Wicklungssträngen induzierten Spannung auf und leitet hieraus die Generatordrehzahl ng ab. Hierzu ist die Vorrichtung 120 mit mindestens einem Verschaltungspunkt 80, 81, 82, 83, 84 verbunden.

Zusätzlich ist eine Vorrichtung 140 im Regler 26 vorhanden, die einen festen Sollwert des Generatorstromes, d.h. die Abgabestrom-Obergrenze, vorgibt. Die Abgabestrom-Obergrenze kann entweder als fester Wert hinterlegt werden oder als programmierbarer Wert, der zum Beispiel am Bandende der Reglerfertigung oder der Generatorfertigung kunden- und generatorspezifisch programmiert wird. In der hier dargestellten Ausführung wird zur Beschränkung des Abgabestroms der Erregerstrom beschränkt, wobei der maximal zulässige Erregerstrom IEmax erfindungsgemäß von Maschinenspezifikationen bzw. Reglerspezifikationen wie Generatorspannung, Abgabestrom-Obergrenze oder-ähnliches abhängt, wobei die Abhängigkeiten des maximal zulässigen Erregerstroms den Abhängigkeiten entsprechen können, wie sie für die Drehzahlgrenze oder für die Zuordnungen beschrieben ist. Weiterhin ist im Regler 26 eine Vorrichtung 110 vorhanden, in der der maximal zulässige Erregerstrom IEmax über Kennfelder aus den Eingangsparametern IGmax- maximal zulässiger Generatorstrom, d.h. Abgabestrom-Obergrenze, Ug - (aktuelle) Generatorspannung und ng - aktuelle bzw. momentane Generatordrehzahl ermittelt wird.

Da die Kennfelder generatorspezifisch sind, ist es vorteilhaft, eine Bandendeprogrammierung vorzusehen. Der Wert IEmax wird an eine weitere Vorrichtung 105 weitergegeben, die die Generatorspannung Ug erfasst und die Generatorspannung durch Ausgabe eines Tastverhältnisses an die Endstufe 100 regelt. Die Vorrichtung 105 begrenzt hierbei den Erregerstrom IE auf den Wert IEmax. Das Bordnetz ist schematisch durch die Fahrzeugbatterie 31 und durch Fahrzeugverbraucher 32 dargestellt. Die Erfindung ist nicht auf dieses Ausführungsbeispiel beschränkt, vielmehr ist es möglich, die Erfindung für beliebige Phasenzahlen und Verschaltungsarten einzusetzen, insbesondere für dreiphasige Anordnungen in Stern oder Dreieck und 2x3 phasige Anordnungen in Stern oder Dreieck.

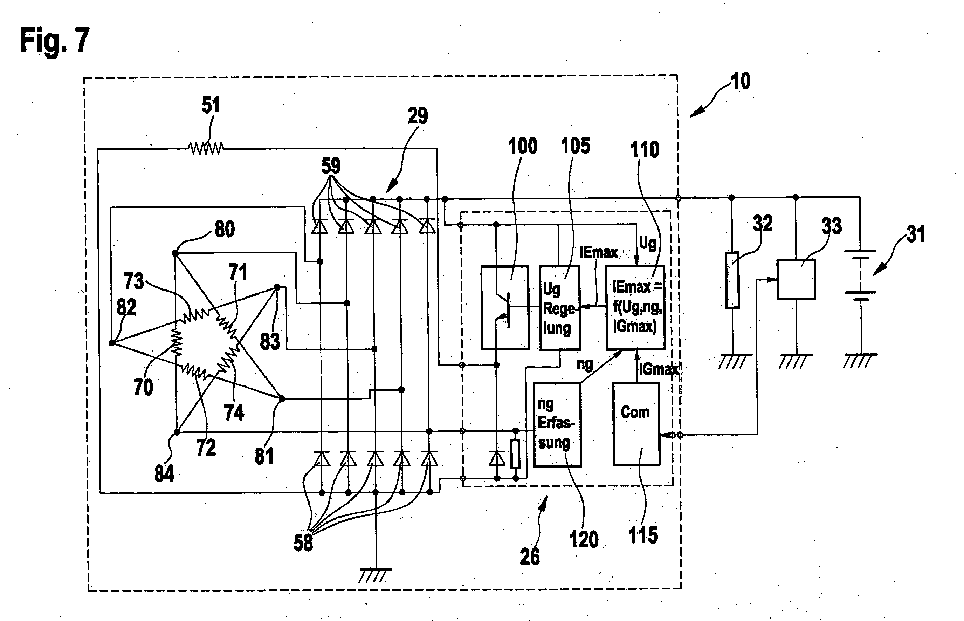

In Figur 7 ist ein Wechselstromgenerator 10 dargestellt, dessen wicklungsseitige Verschaltung sowie die Gleichrichterschaltung dem in Figur 6 dargestellten Wechselstromgenerator ähneln. Für sich entsprechende Elemente werden die gleichen Bezugszeichen verwendet.

Im Einzelnen ist in Figur 7 ein Wechselstromgenerator 10 mix fünf phaseribildenden Wicklungssträngen 70, 71, 72, 73, 74 anhand eines Schaltbildes dargestellt. Die Gesamtheit aller Wicklungsstränge 70, 71, 72, 73, 74 bildet die Ständerwicklung 18. Die fünf phasenbildenden Wicklungsstränge 70, 71, 72, 73, 74 sind zu einer Grundschaltung als fünfzackiger Stern (Drudenfuß) verschaltet, wobei die jeweils in den Zacken des Sterns verschalteten Stränge einen Winkel von ca. 36° el. einschließen. An den Verschalturigspunkten der Zacken 80, 81, 82, 83, 84 des fünfzackigen Sterns ist die Gleichrichterbrückenschaltung 29 angeschlossen.

Die Wicklungsstränge sind wie folgt verschaltet. Der Wicklungsteilsträng 70 ist am Verschaltungspunkt 80 mit dem Wicklungsteilstrang 71 verbunden. Der Wicklungsstrang 71 ist an seinem gegenüberliegenden Ende am Verschaltungspunkt 81 mit dem Wicklungsstrang 72 verbunden. Der Wicklungsstrang 72 ist an seinem gegenüberliegenden Ende am Verschaltungspunkt 82 mit dem Wicklungsstrang 73 verbunden. Der Wicklungsteilstrang 73 ist an seinem gegenüberliegenden Ende am Verschaltungspunkt 83 mit dem Wicklungsstrang 74 verbunden. Der Wicklungsstrang 74 ist an seinem gegenüberliegenden Ende am Verschaltungspunkt 84 mit dem Wicklungsstrang 70 verbunden. Die Verschaltungspunkte befinden sich vorzugsweise axial auf oder neben dem elektronikseitigen Wickelkopf 46 um möglichst kurze Verschaltungswege zu realisieren. Hierzu treten die jeweils zu verschaltenden Arischlussdrähte der Wicklungsstränge 70, 71, 72, 73, 74 eines Verschaltungspunktes 80, 81, 82, 83, 84 vorzugsweise aus in Umfangsrichtung direkt benachbarten Nuten 19 aus. Die Verschaltungspunkte 80, 81, 82, 83, 84 der Wicklungsstränge 70, 71, 72, 73, 74 sind mit einem separaten Brückengleichrichter 29 verbunden, der aus fünf Minusdioden 58 und fünf Plusdioden 59 aufgebaut ist.

Gleichspannungsseitig ist ein Spannungsregler 26 parallel geschaltet, der durch Beeinflussung des Stromes durch die Erregerwicklung 51 die Spannung des Generators regelt. Der Spannungsregler 26 weist eine Vorrichtung 120 zur Erfassung der Frequenz der in den Wicklungssträngen induzierten Spannung auf und leitet hieraus die Generatordrehzahl ng ab. Hierzu ist die Vorrichtung 120 mit mindestens einem Verschaltungspunkt 80; 81, 82, 83, 84 verbunden. Zusätzlich ist eine Vorrichtung 115 im Regler 26 vorhanden, die eine Kommunikation zu einem im Bordnetz angeordneten Steuergerät 33 herstellt. Dieses Steuergerät übermittelt den Wert des maximal zulässigen Generatorstromes Igmax mittels eines Schnittstellenprotokolls wie z. B: PWM, LIN oder CAN. Das Steuergerät 33 kann z.B. das Motorsteuergerät oder vorteilhafter Weise das Batteriesteuergerät sein. Zusätzlich zum über die Schnittstelle vorgegebenen Wert für IGmax kann in der Vorrichtung 115 ein fester Wert hinterlegt sein, der verwendet wird, wenn die Schnittstelle gestört ist. Dieser feste Wert kann z.B. am Bandende der Reglerfertigung oder der Generatorfertigung kunden- und generatorspezifisch programmiert werden. Weiterhin ist im Regler 26 eine Vorrichtung 110 vorhanden, in der der maximal zulässige Erregerstrom IEmax über Kennfelder aus den Eingangsparametern IGmax- maximal zulässiger Generatorstrom, Ug - aktuelle Generatorspannung und ng - aktuelle Generatordrehzahl ermittelt wird. Da die Kennfelder generatorspezifisch sind, ist es vorteilhaft, eine Bandendeprogrammierung vorzusehen. Der Wert IEmax wird an eine weitere Vorrichtung 105 weitergegeben, die die Generatorspannung Ug erfasst und die Generatorspannung durch Ausgabe eines Tastverhältnisses an die Endstufe 100 regelt. Die Vorrichtung 105 begrenzt hierbei den Erregerstrom IE auf den Wert IEmax. Das Bordnetz ist schematisch durch die Fahrzeugbatterie 31 und durch Fahrzeugverbraucher 32 dargestellt. Die Erfindung ist nicht auf dieses Ausführungsbeispiel beschränkt, vielmehr ist es möglich, die Erfindung für beliebige Phasenzahlen und Verschaltungsarten einzusetzen, insbesondere für dreiphasige Anordnungen in Stern oder Dreieck und 2x3 phasige Anordnungen in Stern oder Dreieck.

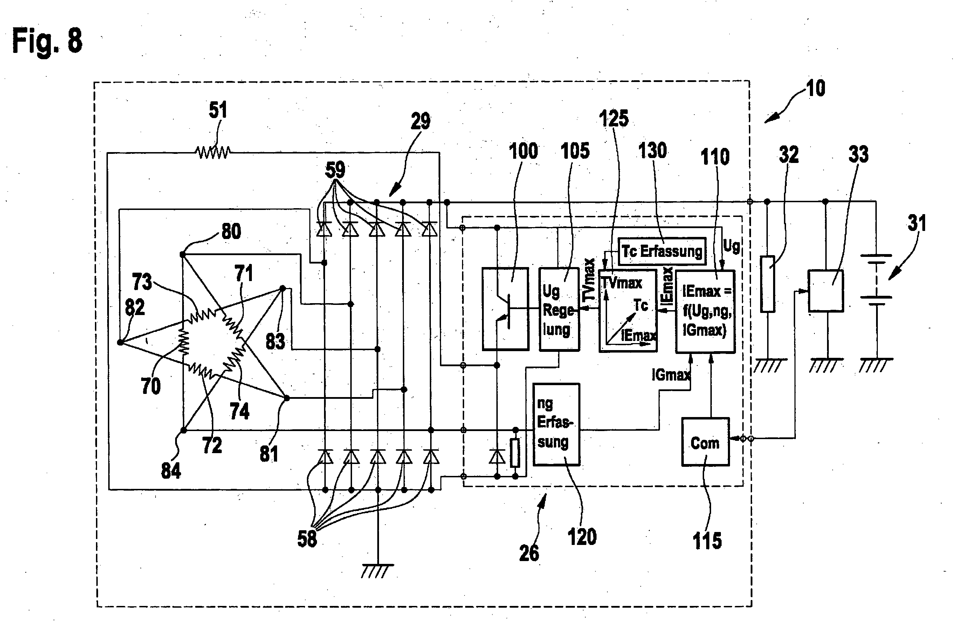

In Figur 8 ist ein Wechselstromgenerator 10 mit fünf phasenbildenden Wicklungssträngen 70, 71, 72, 73, 74 anhand eines Schaltbildes dargestellt. Die Gesamtheit aller Wicklungsstränge 70, 71, 72, 73, 74 bildet die Ständerwicklung 18. Die fünf phasenbildenden Wicklungsstränge 70, 71, 72, 73, 74 sind zu einer Grundschaltung als fünfzackiger Stern (Drudenfuß) verschaltet, wobei die jeweils in den Zacken des Sterns verschalteten Stränge einen Winkel von ca. 36° el. einschließen. An den Verschaltungspunkten der Zacken 80, 81, 82, 83, 84 des fünfzackigen Sterns ist die Gleichrichterbrückenschaltung 29 angeschlossen.

Die Wicklungsstränge sind wie folgt verschaltet. Der Wicklungsteilstrang 70 ist am Verschaltungspunkt 80 mit dem Wicklungsteilstrang 71 verbunden. Der Wicklungsstrang 71 ist an seinem gegenüberliegenden Ende am Verschaltungspunkt 81 mit dem Wicklungsstrang 72 verbunden. Der Wicklungsstrang 72 ist an seinem gegenüberliegenden Ende am Verschaltungspunkt 82 mit dem Wicklungsstrang 73 verbunden. Der Wicklungsteilstrang 73 ist an seinem gegenüberliegenden Ende am Verschaltungspunkt 83 mit dem Wicklungsstrang 74 verbunden. Der Wicklungsstrang 74 ist an seinem gegenüberliegenden Ende am Verschaltungspunkt 84 mit dem Wicklungsstrang 70 verbunden. Die Verschaltungspunkte befinden sich vorzugsweise axial auf oder neben dem elektronikseitigen Wickelkopf 46 um möglichst kurze Verschaltungswege zu realisieren. Hierzu treten die jeweils zu verschaltenden Anschlussdrähte der Wicklungsstränge 70, 71, 72, 73, 74 eines Verschaltungspunktes 80, 81, 82, 83, 84 vorzugsweise aus in Umfangsrichtung direkt benachbarten Nuten 19 aus. Die Verschaltungspunkte 80, 81, 82, 83, 84 der Wicklungsstränge 70, 71, 72, 73, 74 sind mit einem separaten Brückengleichrichter 29 verbunden, der aus fünf Minusdioden 58 und fünf Plusdioden 59 aufgebaut ist.

Gleichspannungsseitig ist ein Spannungsregler 26 parallel geschaltet, der durch Beeinflussung des Stromes durch die Erregerwicklung 51 die Spannung des Generators regelt. Der Spannungsregler 26 weist eine Vorrichtung 120 zur Erfassung der Frequenz der in den Wicklungssträngen induzierten Spannung auf und leitet hieraus die Generatordrehzahl ng ab. Hierzu ist die Vorrichtung 120 mit mindestens einem Verschaltungspunkt 80, 81, 82, 83, 84 verbunden. Zusätzlich ist eine Vorrichtung 115 im Regler 26 vorhanden, die eine Kommunikation zu einem im Bordnetz angeordneten Steuergerät 33 herstellt. Dieses Steuergerät übermittelt den Wert des maximal zulässigen Generatorstromes IGmax mittels eines Schnittstellenprotokolls wie z. B: PWM, LIN oder CAN. Das Steuergerät 33 kann z.B. das Motorsteuergerät oder vorteilhafter Weise das Batteriesteuergerät sein. Zusätzlich zum über die Schnittstelle vorgegebenen Wert für IGmax kann in der Vorrichtung 115 ein fester Wert hinterlegt sein, der verwendet wird, wenn die Schnittstelle gestört ist. Dieser feste Wert kann z.B. am Bandende der Reglerfertigung oder der Generatorfertigung kunden- und generatorspezifisch programmiert werden.

Weiterhin ist im Regler 26 eine Vorrichtung 110 vorhanden, in der der maximal zulässige Erregerstrom IEmax über Kennfelder aus den Eingangsparametern IGmax-maximal zulässiger Generatorstrom, Ug - aktuelle Generatorspannung und ng - aktuelle Generatordrehzahl ermittelt wird. Da die Kennfelder generatorspezifisch sind, ist es vorteilhaft, eine Bandendeprogrammierung vorzusehen. Der Wert IEmax wird an eine weitere Vorrichtung 125 weitergegeben, die aus einem Kennfeld aus dem maximal zulässigen Erregerstrom IEmax und einer Temperatur, die von einem Temperatursensor 130 zur Verfügung gestellt wird, ein maximal zulässiges Tastverhältnis berechnet. Der Temperatursensor kann z.B. ein Sensor innerhalb des Reglers sein, aber auch ein Sensor, der die Umgebungstemperatur des Generators oder die Temperatur wichtiger Komponenten wie z.B. des Gleichrichter oder des Stators aufnimmt.

Das maximal zulässige Tastverhältnis TVmax wird an eine weitere, Vorrichtung 105 weitergegeben, die die Generatorspannung Ug erfasst und die Generatorspannung durch Ausgabe eines Tastverhältnisses an die Endstufe 100 regelt. Die Vorrichtung 105 begrenzt hierbei das Tastverhältnis TV auf den Wert TVmax. Das Bordnetz ist schematisch durch die Fahrzeugbatterie 31 und durch Fahrzeugverbraucher 32 dargestellt. Die Erfindung ist nicht auf dieses Ausführungsbeispiel beschränkt, vielmehr ist es möglich, die Erfindung für beliebige Phasenzahlen und Verschaltungsarten einzusetzen, insbesondere für dreiphasige Anordnungen in Stern oder Dreieck und 2x3 phasige Anordnungen in Stern oder Dreieck.

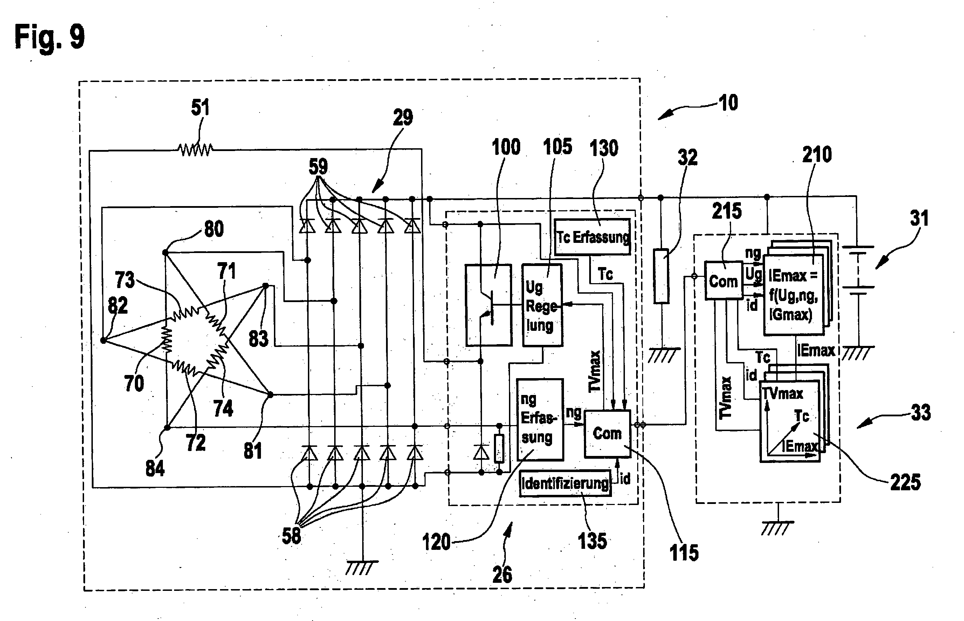

In Figur 9 ist ein Wechselstromgenerator 10 mit fünf phasenbildenden Wicklungssträngen 70, 71, 72, 73, 74 anhand eines Schaltbildes dargestellt. Die Gesamtheit aller Wicklungsstränge 70, 71, 72, 73, 74 bildet die Ständerwicklung 18. Die fünf phasenbildenden Wicklungsstränge 70, 71, 72, 73, 74 sind zu einer Grundschaltung als fünfzackiger Stern (Drudenfuß) verschaltet, wobei die jeweils in den Zacken des Sterns verschalteten Stränge einen Winkel von ca. 36° el. einschließen. An den Verschaltungspunkten der Zacken 80, 81, 82, 83, 84 des fünfzackigen Sterns ist die Gleichrichterbrückenschaltung 29 angeschlossen. Die Wicklungsstränge sind wie folgt verschaltet. Der Wicklungsteilstrang 70 ist am Verschaltungspunkt 80 mit dem Wicklungsteilstrang 71 verbunden. Der Wicklungsstrang 71 ist an seinem gegenüberliegenden Ende am Verschaltungspunkt 81 mit dem Wicklungsstrang 72 verbunden. Der Wicklungsstrang 72 ist an seinem gegenüberliegenden Ende am Verschaltungspunkt 82 mit dem Wicklungsstrang 73 verbunden. Der Wicklungsteilstrang 73 ist an seinem gegenüberliegenden Ende am Verschaltungspunkt 83 mit dem Wicklungsstrang 74 verbunden. Der Wicklungsstrang 74 ist an seinem gegenüberliegenden Ende am Verschaltungspunkt 84 mit dem Wicklungsstrang 70 verbunden. Die Verschaltungspunkte befinden sich vorzugsweise axial auf oder neben dem elektronikseitigen Wickelkopf 46 um möglichst kurze Verschaltungswege zu realisieren. Hierzu treten die jeweils zu verschaltenden Anschlussdrähte der Wicklungsstränge 70, 71, 72, 73, 74 eines Verschaltungspunktes 80,81, 82, 83, 84 vorzugsweise aus in Umfangsrichtung direkt benachbarten Nuten 19 aus. Die Verschaltungspunkte 80, 81, 82, 83, 84 der Wicklungsstränge 70, 71, 72, 73, 74 sind mit einem separaten Brückengleichrichter 29 verbunden, der aus fünf Minusdioden 58 und fünf Plusdioden 59 aufgebaut ist.

Gleichspannungsseitig ist ein Spannungsregler 26 parallel geschaltet, der durch Beeinflussung des Stromes durch die Erregerwicklung 51 die Spannung des Generators regelt. Der Spannungsregler 26 weist eine Vorrichtung 120 zur Erfassung der Frequenz der in den Wicklungssträngen induzierten Spannung auf und leitet hieraus die Generatordrehzahl ng ab. Hierzu ist die Vorrichtung 120 mit mindestens einem Verschaltungspunkt 80, 81, 82, 83, 84 verbunden. Zusätzlich ist eine Vorrichtung 115 im Regler 26 vorhanden, die eine Kommunikation zu einem im Bordnetz angeordneten Steuergerät 33 herstellt. Weiter ist eine Vorrichtung 135 enthalten, die einen Generator und / oder kundenspezifischen Identifikationscode enthält, der eine Zuordnung von Kennfeldern zu einem bestimmen Code erlaubt. Die Vorrichtung 135 wird vorzugsweise am Bandende der Reglerfertigung bedatet. Weiter ist ein Temperatursensor 130 vorhanden der einen Temperaturwert zur Verfügung stellt. Der Temperatursensor kann z.B. ein Sensor innerhalb des Reglers sein, aber auch ein Sensor, der die Umgebungstemperatur des Generators oder die Temperatur wichtiger Komponenten wie z.B. des Gleichrichter oder des Stators aufnimmt. An das Steuergerät 33 werden über die Schnittstellenvorrichtung 115 die Spannung Ug, die Temperatur Tc, die Drehzahl ng und der Identifikationscode id übermittelt.

Innerhalb des Steuergerätes gibt es eine Schnittstellenvorrichtung 215, die die Werte von Ug, id, ng und Tc empfängt. Durch den Identifikationscode id wird in einer Kennfeldvorrichtung, in dem Kennfelder verschiedener Generatoren hinterlegt sind, das zum Generator 10 passende Kennfeld identifiziert und mittels der Eingangsgrößen ug und ng aus der Schnittstellenvorrichtung 215 und dem max. zulässigen Generatorstrom IGmax ein maximal zulässiger Erregerstrom IEmax berechnet. Dieser wird an eine weitere Vorrichtung weitergegeben, die ein weiteres Kennfeld mittels des Identifikationscodes identifiziert und aus den Eingangsgrößen des Temperatursensors und des max. zul. Erregerstromes ein max. zulässiges Tastverhältnis TVmax ermittelt. das max. zulässige Tastverhältnis wird mittels der Schnittstellenvorrichtung 215 des Steuergerätes 33 an die Schnittstellenvorrichtung des Reglers 115 übermittelt. Von der Schnittstellenvorrichtung 115 des Reglers 26 wird das max. zulässige Tastverhältnis. Das maximal zulässige Tastverhältnis TVmax wird an eine weitere Vorrichtung 105 weitergegeben, die die Generatorspannung Ug erfasst und die Generatorspannung durch Ausgabe eines Tastverhältnisses an die Endstufe 100 regelt. Die Vorrichtung 105 begrenzt hierbei das Tastverhältnis TV auf den Wert TVmax.

Das Bordnetz ist schematisch durch die Fahrzeugbatterie 31 und durch Fahrzeugverbraucher 32 dargestellt. Die Erfindung ist nicht auf dieses Ausführungsbeispiel beschränkt, vielmehr ist es möglich, die Erfindung für beliebige Phasenzahlen und Verschaltungsarten einzusetzen, insbesondere für dreiphasige Anordnungen in Stern oder Dreieck und 2x3 phasige Anordnungen in Stern oder Dreieck. Bei diesem Aufbau ist es prinzipiell auch möglich, dass die Temperatur nicht am Generator, sondern an einer anderen Komponenten, z.B. am Verbrennungsmotor ermittelt wird. Zusätzlich ist es auch möglich, statt der Generatordrehzahl als Eingangsgröße für die Vorrichtung 210 auch die Verbrennungsmotordrehzahl einzusetzen.

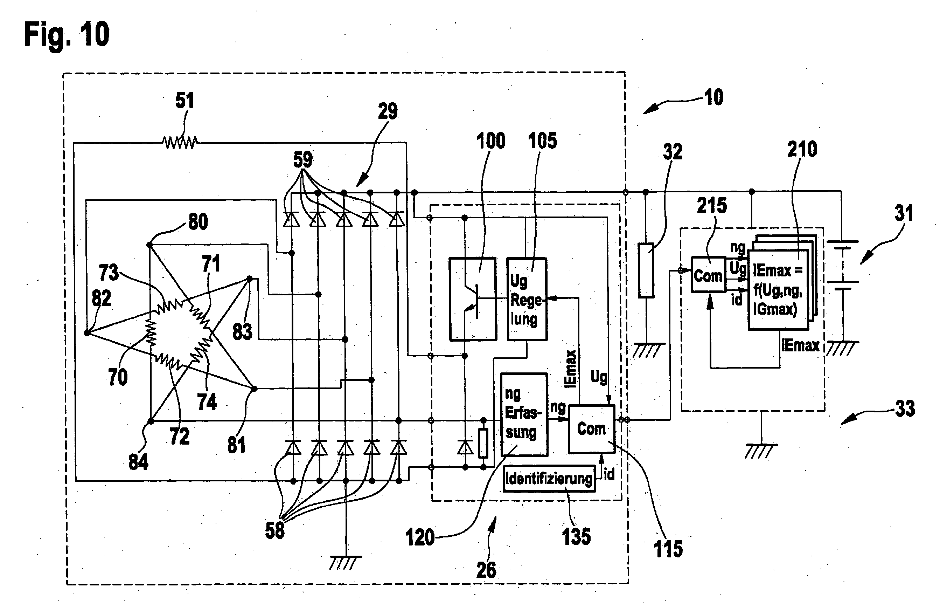

In Figur 10 ist ein Wechselstromgenerator 10 mit fünf phasenbildenden Wicklungs strängen 70, 71, 72, 73, 74 anhand eines Schaltbildes dargestellt. Die Gesamtheit aller Wicklungsstränge 70, 71, 72, 73, 74 bildet die Ständerwicklung 18. Die fünf phasenbildenden Wicklungsstränge 70, 71, 72, 73, 74 sind zu einer Grundschaltung als fünfzackiger Stern (Drudenfuß) verschaltet, wobei die jeweils in den Zacken des Sterns verschalteten Stränge einen Winkel von ca. 36° el. einschließen. An den Verschaltungspunkten der Zacken 80, 81, 82, 83, 84 des fünfzackigen Sterns ist die Gleichrichterbrückenschaltung 29 angeschlossen. Die Wicklungsstränge sind wie folgt verschaltet. Der Wicklungsteilstrang 70 ist am Verschaltungspunkt 80 mit dem Wicklungsteilstrang 71 verbunden. Der Wicklungsstrang 71 ist an seinem gegenüberliegenden Ende am Verschaltungspunkt 81 mit dem Wicklungsstrang 72 verbunden. Der Wicklungsstrang 72 ist an seinem gegenüberliegenden Ende am Verschaltungspunkt 82 mit dem Wicklungsstrang 73 verbunden. Der Wicklungsteilstrang 73 ist an seinem gegenüberliegenden Ende am Verschaltungspunkt 83 mit dem Wicklungsstrang 74 verbunden. Der Wicklungsstrang 74 ist an seinem gegenüberliegenden Ende am Verschaltungspunkt 84 mit dem Wicklungsstrang 70 verbunden. Die Verschaltungspunkte befinden sich vorzugsweise axial auf oder neben dem elektronikseitigen Wickelkopf 46 um möglichst kurze Verschaltungswege zu realisieren. Hierzu treten die jeweils zu verschaltenden Anschlussdrähte der Wicklungsstränge 70, 71, 72, 73, 74 eines Verschaltungspunktes 80, 81, 82, 83, 84 vorzugsweise aus in Umfangsrichtung direkt benachbarten Nuten 19 aus. Die Verschaltungspunkte 80, 81, 82, 83, 84 der Wicklungsstränge 70, 71, 72, 73, 74 sind mit einem separaten Brückengleichrichter 29 verbunden, der aus fünf Minusdioden 58 und fünf Plusdioden 59 aufgebaut ist.

Gleichspannungsseitig ist ein Spannungsregler 26 parallel geschaltet, der durch Beeinflussung des Stromes durch die Erregerwicklung 51 die Spannung des Generators regelt. Der Spannungsregler 26 weist eine Vorrichtung 120 zur Erfassung der Frequenz der in den Wicklungssträngen induzierten Spannung auf und leitet hieraus die Generatordrehzahl ng ab. Hierzu ist die Vorrichtung 120 mit mindestens einem Verschaltungspunkt 80, 81, 82, 83, 84 verbunden. Zusätzlich ist eine Vorrichtung 115 im Regler 26 vorhanden, die eine Kommunikation zu einem im Bordnetz angeordneten Steuergerät 33 herstellt. Weiter ist eine Vorrichtung 135 enthalten, die einen Generator und / oder kundenspezifischen Identifikationscode enthält, der eine Zuordnung von Kennfeldern zu einem bestimmen Code erlaubt. Die Vorrichtung 135 wird vorzugsweise am Bandende der Reglerfertigung beschrieben. An das Steuergerät 33 werden über die Schnittstellenvorrichtung 115 die Spannung Ug, die Drehzahl ng und der Identifikationscode id übermittelt.

Innerhalb des Steuergerätes gibt es eine Schnittstellenvorrichtung 215, die die Werte von Ug, id und ng empfängt. Durch den Identifikationscode id wird in einer Kennfeldvorrichtung, in dem Kennfelder verschiedener Generatoren hinterlegt sind, das zum Generator 10 passende Kennfeld identifiziert und mittels der Eingangsgrößen ug und ng aus der Schnittstellenvorrichtung 215 und dem max. zulässigen Generatorstrom igmax ein maximal zulässiger Erregerstrom IEmax berechnet. Dieser wird an die Schnittstellenvorrichtung 215 des Steuergerätes 33 übermittelt Der maximal zulässige Erregerstrom IEmax wird mittels der Schnittstellenvorrichtung 215 des Steuergerätes 33 an die Schnittstellenvorrichtung 115 des Reglers 115 übermittelt. Von der Schnittstellenvorrichtung 115 des Reglers 26 wird der maximal zulässige Erregerstrom an eine weitere Vorrichtung 105 weitergegeben, die die Generatorspannung Ug erfasst und die Generatorspannung durch Ausgabe eines Tastverhältnisses an die Endstufe 100 regelt. Die Vorrichtung 105 begrenzt hierbei den Erregerstrom IE auf den Wert IEmax. Das Bordnetz ist schematisch durch die Fahrzeugbatterie 31 und durch Fahrzeugverbraucher 32 dargestellt.

Die Erfindung ist nicht auf dieses Ausführungsbeispiel beschränkt, vielmehr ist es möglich, die Erfindung für beliebige Phasenzahlen und Verschaltungsarten einzusetzen, insbesondere für dreiphasige Anordnungen in Stern oder Dreieck und 2x3 phasige Anordnungen in Stern oder Dreieck. Es ist es auch möglich, statt der Generatordrehzahl als Eingangsgröße für die Vorrichtung 210 auch die Verbrennungsmotordrehzahl einzusetzen.

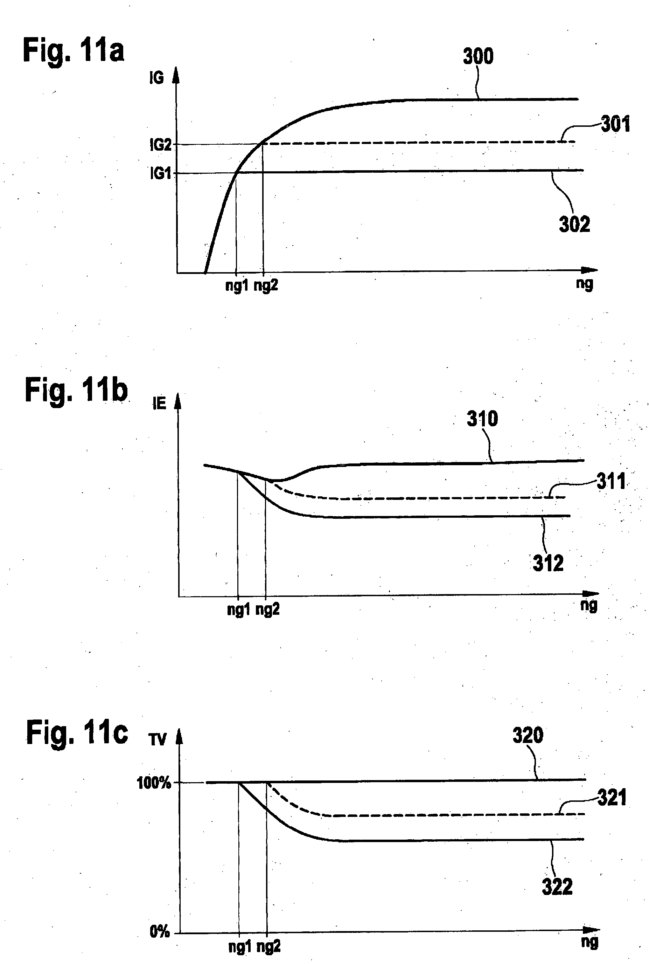

In Figur 11 sind weitere Zusammenhänge zwischen Generatorausgangsstrom, Erregerstrom, Erregerstromtastverhältnis und Generatordrehzahl angegeben. Figur 11a zeigt dabei den Verlauf des Generatorstroms IG über der Drehzahl ng bei einer bestimmten Generatorspannung. Hierbei sind drei Kurven 300, 301, 302 eingetragen. Die Kurve 300 zeigt den maximal möglichen Generatorstrom IGmax, der der Abgabestrom-Obergrenze entspricht. Weiter ist eine Kurve 301 eingezeichnet, die eine erfindungsgemäße Begrenzung auf einen Strom von IG2, ab einer Drehzahl von ng2 erkennen lässt. Entsprechend ist mit Kurve 302 eine Begrenzung des Generatorstroms auf IG1, ab einer Drehzahl von ng1 dargestellt, wobei ng1 kleiner als ng2 ist und IG1 kleiner als IG2 ist

Figur 11b zeigt für die Kurven aus Figur 11a die dazugehörigen Verläufe der Erregerströme über der Drehzahl, bei einer bestimmten Generatorspannung. Hierbei sind drei Kurven 310, 311, 312 eingetragen. Die Kurve 310 zeigt den Erregerstrom bei maximal möglichem Generatorstrom IGmax. Weiter ist eine Kurve 311 eingezeichnet, die den Verlauf des Erregerstroms für eine Begrenzung auf einen Generatorstrom von IG2 ab einer Drehzahl von ng2 zeigt. Entsprechend ist mit Kurve 312 der Erregerstromverlauf bei einer Begrenzung auf IG1 ab einer Drehzahl von ng1 dargestellt.

Figur 11c zeigt den zu den Stromverläufen nach den Figuren 11a und 11b zugehörigen Verlauf des Erregerstrom-Tastverhältnis TV über der Drehzahl, bei einer bestimmten Generatorspannung. Hierbei sind drei Kurven 320, 321, 322 eingetragen. Die Kurve 320 zeigt das Tastverhältnis bei maximal möglichem Generatorstrom IGmax Das Tastverhältnis beträgt dann TV=100%. Weiter ist eine Verlauf des Tastverhältnisses 321 eingezeichnet, die das Tastverhältnis TV für eine Begrenzung auf einen Generatorstrom von IG2, ab einer Drehzahl von ng2 zeigt. Entsprechend ist mit Kurve 322 das Tastverhältnis bei einer Begrenzung auf IG1 ab einer Drehzahl von ng1 wiedergegeben.

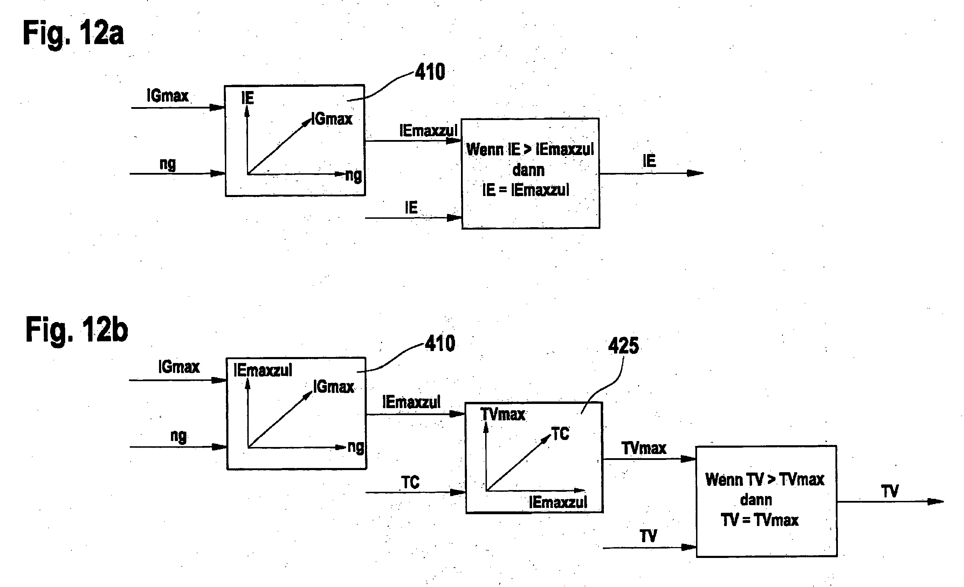

Die Figur 12a zeigt eine vereinfachte Ausgestaltung der Erfindung, bei der keine Korrektur der Generatorspannung vorgesehen ist. Hierdurch wird die Begrenzung und der Regelverlauf grober als bei den bisher beschriebenen Verfahren. Als Eingangsgröße der Komponente 410, in der ein Kennfeld zur Ermittlung des max. zulässigen Erregerstromes hinterlegt ist, dienen nur die Größen: maximal zulässiger Generatorstrom IGmax und die Generatordrehzahl ng oder eine Größe, die zur Generatordrehzahl proportional ist. Der hieraus ermittelte max. zulässige Erregerstrom wird direkt zur Begrenzung des tatsächlichen Erregerstromes verwendet.

Die Figur 12b zeigt eine vereinfachte Form der Erfindung, bei der ebenfalls keine Korrektur der Generatorspannung vorgesehen ist. Hierdurch wird die Begrenzung deutlich grober als bei den bisher beschriebenen Verfahren. Als Eingangsgröße der Komponente 410, in der ein Kennfeld zur Ermittlung des max. zulässigen Erregerstromes hinterlegt ist, dienen hier: Der maximal zulässige Generatörstrom IGmax und die Generatordrehzahl ng oder eine Größe, die zur Generatordrehzahl proportional ist. Einer darauf folgenden Komponente 425 werden als Eingangsgrößen IEmaxzul (= Erregerstrom-Obergrenze, d.h. maximal zulässiger Erregerstrom) und eine Temperatur Tc zugeführt und aus einem Kennfeld ein maximal zulässiges Tastverhältnis TVmax für den Erregerstrom ermittelt, das direkt zur Begrenzung des tatsächlichen Tastverhältnisses verwendet wird.

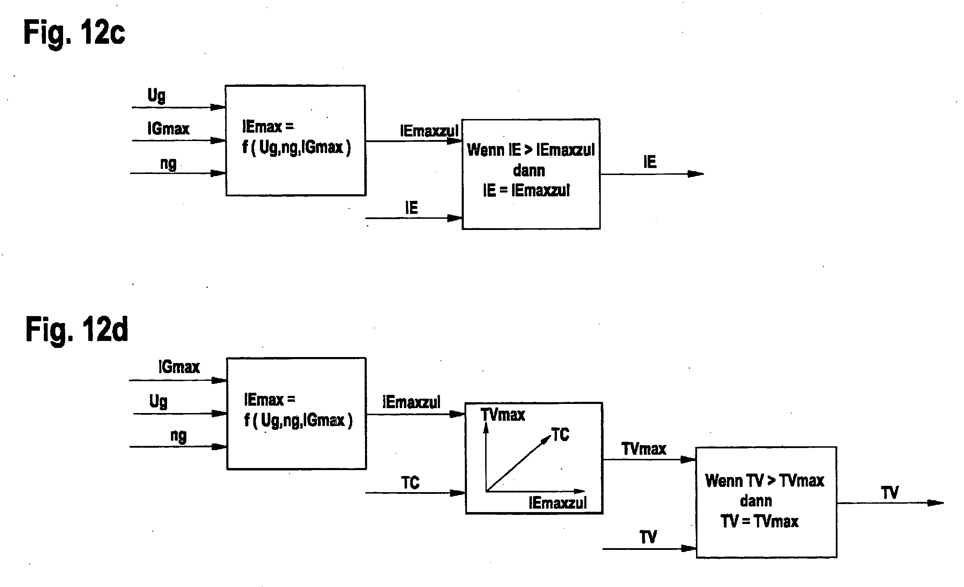

Die Figur 12c zeigt eine erfindungsgemäße Ausführung entsprechend den Figuren 6, 7 und 10.

Die Figur 12d zeigt eine erfindungsgemäße Ausführung entsprechend den Figuren 8 und 9.

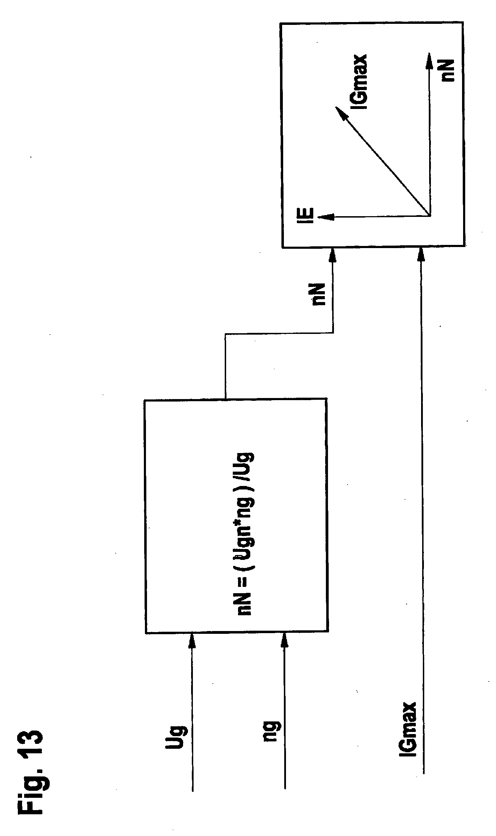

Die Figur 13 zeigt eine Vereinfachung gegenüber Figur 12c und 12d. Bei Figur 12c und 12d werden Kennfelder über drei Eingangsparameter IEmax = f (Ug, ng, IGmax) hinterlegt, hierdurch steigt der Speicherplatzbedarf und auch der Rechenbedarf. Dieses Problem lässt sich vermeiden, wenn nur ein Kennfeld IE = f (IGmax, nN) für eine Generatorspannung Ugn hinterlegt wird und der Eingangsparameter Generatordrehzahl ng mit der Generatorspannung UG auf die normierte Drehzahl nN mit der Formel nN = (Ugn*ng) / Ug umgerechnet wird.

Prinzipiell kann die Maschine bzw. der Generator für eine Vielzahl von Anwendungen vorgesehen werden, jedoch eignen sich für die Realisierung der Erfindung insbesondere Lichtmaschinen, Startergeneratoren, Generatoren oder Rekuperierungsmaschinen in Kraftfahrzeugen, beispielsweise Fahrzeugen mit Verbrennungsmotor und Starter bzw. Generator oder Hybridfahrzeuge oder Fahrzeuge mit Start-Stopp-Funktion.

## Patentansprüche

1. Verfahren zur Beschränkung eines Abgabestroms (IG), der von einer elektrischen Maschine mit Erregerwicklung erzeugt wird, durch Beeinflussen des durch die Erregerwicklung fließenden Erregerstroms (IE) mittels eines Spannungsreglers, so dass der Abgabestrom (IG) eine vorgebbare Abgabestrom-Obergrenze (IGmax) nicht überschreitet, **dadurch gekennzeichnet, dass** aus der Abgabestrom-Obergrenze (IGmax), einer Generatordrehzahl (nG) ein maximal zulässiger Erregerstrom (IEmax, IEmaxzul) ermittelt wird, wobei der maximal zulässige Erregerstrom (IEmax, IEmaxzul) einer Vorrichtung (105, 125) übermittelt wird, die zur Begrenzung des Erregerstroms (IE) eine Generatorspannung (Ug) durch Ausgabe eines Tastverhältnisses (TV) zur Regelung des Erregerstroms (IE) an eine Endstufe (100) regelt, und hierbei den Erregerstrom (IE) auf den maximal zulässigen Erregerstrom (IEmax, IEmaxzul) begrenzt.

2. Verfahren nach Anspruch 1, **dadurch gekennzeichnet, dass** beginnend einer Genera-tordrehzahl, die einer ersten Drehzahl (n1) entspricht, der Erregerstrom (IE) auf den maximal zulässigen Erregerstrom (IGmax, IEmaxzul) begrenzt wird und der Erregerstrom (IE) bei höheren Drehzahlen auf den maximal zulässigen Erregerstrom (IEmax, IEmaxzul) begrenzt bleibt.

3. Verfahren zur Beschränkung des Abgabestroms nach Anspruch 1 oder 2, **dadurch gekennzeichnet, dass** der Erregerstrom (IE) verringert wird durch Verringerung eines Tastverhältnisses (TV), mit dem der Erregerstrom (IE) geschaltet wird und das maximale Tastverhältnis (TVmax) zur Regelung des Erregerstroms (IE) aus dem ermittelten maximal zulässigen Erregerstrom ((IEmax, IEmaxzul) und einer Temperatur (Tc) ermittelt wird und das Tastverhältnis (TV) auf dieses Tastverhältnis (TVmax) begrenzt wird.

4. Verfahren zur Beschränkung des Abgabestroms nach Anspruch 3, **dadurch gekennzeichnet, dass** die Temperatur (Tc) mittels eines Temperatursensors (130) ermittelt wird, wobei der Temperatursensor (130) die Temperatur innerhalb des Spannuhgsreglers misst oder die Umgebungstemperatur oder die Temperatur vorgebbarer Komponenten, insbesondere wichtiger Komponenten des Gleichrichters oder des Stators misst.

5. Verfahren zur Beschränkung des Abgabestroms nach Anspruch 1, 2, 3 oder 4, **dadurch gekennzeichnet, dass** der Erregerstrom (IE) mittels einer Kennlinie oder einem Kennfeld begrenzt wird.

6. Verfahren zur Beschränkung des Abgabestroms nach einem der vorhergehenden Ansprüche, **dadurch gekennzeichnet, dass** benötigte Kennlinien oder Kennfelder im Spannungsregler oder in einem Steuergerät hinterlegt sind.

7. Verfahren zur Beschränkung des Abgabestroms nach einem der vorhergehenden Ansprüche, **dadurch gekennzeichnet, dass** der maximale Erregerstrom (IEmax, IEmaxzul) mittels einer Look-up-Tabelle, mittels einer Kennlinie oder mittels einer Näherungsformel ermittelt wird.

8. Verfahren zur Beschränkung des Abgabestroms nach einem der vorhergehenden Ansprüche, **dadurch gekennzeichnet, dass** der reale Verlauf des begrenzten Erregerstroms (IE) beim Wechsel oder beim Übergang zwischen Begrenzungswerten gestuft oder als Rampe mit einem vorgebbaren zeitlichen Verlauf realisiert ist und insbesondere so erfolgt, dass keine Sprünge des Erregerstroms (IE) auftreten.

9. Verfahren zur Beschränkung des Abgabestroms nach einem der vorhergehenden Ansprüche, **dadurch gekennzeichnet, dass** die Änderungsgeschwindigkeit und/oder die zeitlichen Verläufe der Erregerströme steigend und fallend unterschiedlich sind.

10. Verfahren zur Beschränkung des Abgabestroms nach einem der vorhergehenden Ansprüche, **dadurch gekennzeichnet, dass** die Generatordrehzahl (n1), oberhalb der die Erregerstrombegrenzung erfolgt, variabel ist.

11. Verfahren zur Beschränkung des Abgabestroms nach Anspruch 10, **dadurch gekennzeichnet, dass** auch die Generatordrehzahlen (n2) und (n3) variabel sind.

12. Verfahren zur Beschränkung des Abgabestroms nach Anspruch 10 oder 11, **dadurch gekennzeichnet, dass** die Generatordrehzahlen (n1, n2, n3) insbesondere beim ersten Hochfahren des Generators ermittelt oder von einer Logik, insbesondere einem Steuergerät über eine Schnittstelle zugeführt werden und in einen Speicher eingeschrieben werden.

13. Verfahren zur Beschränkung des Abgabestroms nach einem der vorhergehenden Ansprüche, **dadurch gekennzeichnet, dass** Informationen zwischen dem Spannungsregler und einem Steuergerät, insbesondere dem Motorsteuerung bidirektional austauschbar sind.

14. Verfahren zur Beschränkung des Abgabestroms nach einem der vorhergehenden Ansprüche, **dadurch gekennzeichnet, dass** die Maschinenauslegung unter Berücksichtigung der Abgabestrom-Obergrenze (IGmax) erfolgt.

15. Verfahren zur Beschränkung des Abgabestroms nach einem der vorhergehenden Ansprüche, **dadurch gekennzeichnet, dass** die Generatorstrombegrenzung außer Kraft gesetzt wird oder um einen vorgebbaren Betrag erhöht wird, wenn ein minimaler Generatorspannungswert erreicht oder unterschritten wird.

16. Verfahren zur Beschränkung des Abgabestroms nach einem der vorhergehenden Ansprüche, **dadurch gekennzeichnet, dass** der Sollwert des maximal zulässigen Generatorabgabestroms anhand von ermittelten Temperaturwerten durch den Spannungsregler oder das Steuergerät reduziert wird.

17. Vorrichtung zur Beschränkung eines Abgabestroms (IG), der von einer elektrischen Maschine mit Erregerwicklung erzeugt wird, wobei die Vorrichtung eingerichtet ist, alle Schritte des Verfahrens nach einem der Ansprüche 1 bis 16 auszuführen.

## Claims

1. Method for restricting an output current (IG) which is generated by an electrical machine having a field winding, by influencing the field current (IE) flowing through the field winding by means of a voltage regulator, with the result that the output current (IG) does not exceed a presettable output current upper limit (IGmax), **characterized in that** a maximum permissible field current (IEmax, IEmaxzul) is determined from the output current upper limit (IGmax), a generator speed (nG), wherein the maximum permissible field current (IEmax, IEmaxzul) is transmitted to an apparatus (105, 125), which regulates a generator voltage (Ug) by outputting a duty factor (TV) for regulating the field current (IE) to an output stage (100) in order to limit the field current (IE) and in the process limit the field current (IE) to the maximum permissible field current (IEmax, IEmaxzul).

2. Method according to Claim 1, **characterized in that**, beginning with a generator speed which corresponds to a first speed (n1), the field current (IE) is limited to the maximum permissible field current (IEmax, IEmaxzul), and the field current (IE) remains limited to the maximum permissible field current (IEmax, IEmaxzul) at higher speeds.

3. Method for restricting the output current according to Claim 1 or 2, **characterized in that** the field current (IE) is reduced by reducing a duty factor (TV) at which the field current (IE) is switched, and the maximum duty factor (TVmax) for regulating the field current (IE) is determined from the determined maximum permissible field current (IEmax, IEmaxzul) and a temperature (Tc), and the duty factor (TV) is limited to this duty factor (TVmax).

4. Method for restricting the output current according to Claim 3, **characterized in that** the temperature (Tc) is determined by means of a temperature sensor (130), wherein the temperature sensor (130) measures the temperature within the voltage regulator or measures the ambient temperature or the temperature of presettable components, in particular important components of the rectifier or the stator.

5. Method for restricting the output current according to Claim 1, 2, 3 or 4, **characterized in that** the field current (IE) is limited by means of a characteristic or a family of characteristics.

6. Method for restricting the output current according to one of the preceding claims, **characterized in that** required characteristics or families of characteristics are stored in the voltage regulator or in a control device.

7. Method for restricting the output current according to one of the preceding claims, **characterized in that** the maximum field current (IEmax, IEmaxzul) is determined by means of a look-up table, by means of a characteristic or by means of an approximation formula.

8. Method for restricting the output current according to one of the preceding claims, **characterized in that** the real profile of the limited field current (IE) is stepped in the case of a change or in the case of a transition between limitation values or is realized as a ramp with a presettable time profile and in particular is such that no sudden changes in the field current (IE) occur.

9. Method for restricting the output current according to one of the preceding claims, **characterized in that** the rate of change and/or the time profiles of the field currents are different on the rise and falling.

10. Method for restricting the output current according to one of the preceding claims, **characterized in that** the generator speed (n1) above which the field current limitation takes place is variable.

11. Method for restricting the output current according to Claim 10, **characterized in that** the generator speeds (n2) and (n3) are also variable.

12. Method for restricting the output current according to Claim 10 or 11, **characterized in that** the generator speeds (n1, n2, n3) are determined in particular the first time the generator is run up or are supplied by logic, in particular a control device via an interface, and are written to a memory.

13. Method for restricting the output current according to one of the preceding claims, **characterized in that** information is exchangeable bidirectionally between the voltage regulator and a control device, in particular the motor controller.

14. Method for restricting the output current according to one of the preceding claims, **characterized in that** the machine setup is performed taking into consideration the output current upper limit (IGmax).

15. Method for restricting the output current according to one of the preceding claims, **characterized in that** the generator current limitation is suspended or increased by a presettable magnitude when a minimum generator voltage value is reached or is undershot.

16. Method for restricting the output current according to one of the preceding claims, **characterized in that** the setpoint value of the maximum permissible generator output current is reduced on the basis of determined temperature values by the voltage regulator or the control device.

17. Apparatus for restricting an output current (IG) which is generated by an electric machine having a field winding, wherein the apparatus is designed to implement all of the steps in the method according to one of Claims 1 to 16.

## Revendications

1. Procédé pour limiter le courant (IG) délivré par une machine électrique dotée d'un enroulement d'excitation en agissant au moyen d'un régulateur de tension sur le courant d'excitation (IE) qui s'écoule dans l'enroulement d'excitation de telle sorte que le courant délivré (IG) ne dépasse pas une limite supérieure prédéterminée du courant délivré (IGmax), **caractérisé en ce que**
un courant maximal admissible d'excitation (IEmax, IEmaxzul) est déterminé à partir de la limite supérieure (IGmax) du courant délivré et de la vitesse de rotation (nG) du générateur, le courant maximal admissible d'excitation (IEmax, IEmaxzul) étant transmis à un dispositif (105, 125) qui, pour limiter le courant d'excitation (IE), régule la tension de générateur (UG) en délivrant à un étage final (100) un taux d'échantillonnage (TV) pour la régulation du courant d'excitation (IE) pour ainsi limiter le courant d'excitation (IE) au courant d'excitation maximal admissible (IEmax, IEmaxzul).

2. Procédé selon la revendication 1, **caractérisé en ce que** partant d'une vitesse de rotation du générateur qui correspond à une première vitesse de rotation (n1), le courant d'excitation (IE) est limité au courant d'excitation maximal admissible (IEmax, IEmaxzul), le courant d'excitation (IE) restant limité au courant d'excitation maximal admissible (IEmax, IEmaxzul) aux vitesses de rotation plus élevées.

3. Procédé de limitation du courant délivré selon les revendications 1 ou 2, **caractérisé en ce que** le courant d'excitation (IE) est diminué par diminution du taux d'échantillonnage (TV) par lequel le courant d'excitation (IE) est commuté et le taux d'échantillonnage maximal (TVmax) utilisé pour la régulation du courant d'excitation (IE) est déterminé à partir du courant d'excitation maximal admissible (IEmax, IEmaxzul) ainsi déterminé et d'une température (Tc), le taux d'échantillonnage (TV) étant limité à ce taux d'échantillonnage (TVmax).

4. Procédé de limitation du courant délivré selon la revendication 3, **caractérisé en ce que** la température (Tc) est déterminée au moyen d'un capteur de température (130), le capteur de température (130) mesurant la température qui règne à l'intérieur du régulateur de tension, la température ambiante ou la température de composants prédéterminés et en particulier de composants importants du redresseur ou du stator.

5. Procédé de limitation du courant délivré selon les revendications 1, 2, 3 ou 4, **caractérisé en ce que** le courant d'excitation (IE) est limité au moyen d'une ligne caractéristique ou d'un champ de caractéristiques.

6. Procédé de limitation du courant délivré selon l'une des revendications précédentes, **caractérisé en ce que** la ligne caractéristique ou le champ de caractéristiques nécessaires sont conservés en mémoire dans le régulateur de tension ou dans un appareil de commande.

7. Procédé de limitation du courant délivré selon l'une des revendications précédentes, **caractérisé en ce que** le courant maximum d'excitation (IEmax, IEmaxzul) est déterminé au moyen d'un tableau de consultation, au moyen d'une ligne caractéristique ou au moyen d'une formule approchée.

8. Procédé de limitation du courant délivré selon l'une des revendications précédentes, **caractérisé en ce que** l'évolution réelle du courant d'excitation (IE) limité est étagée lors de l'alternance ou du passage entre des valeurs limites ou est réalisée sous la forme d'une rampe dont l'évolution temporelle est prédéterminée, et a lieu en particulier de telle sorte qu'aucun saut ne survienne dans le courant d'excitation (IE).

9. Procédé de limitation du courant délivré selon l'une des revendications précédentes, **caractérisé en ce que** la vitesse de modification et/ou l'évolution. temporelle des courants d'excitation montants et descendants sont différentes.

10. Procédé de limitation du courant délivré selon l'une des revendications précédentes, **caractérisé en ce que** la vitesse de rotation (n1) du générateur au-dessus de laquelle la limitation du courant d'excitation a lieu est variable.

11. Procédé de limitation du courant délivré selon la revendication 10, **caractérisé en ce que** les vitesses de rotation (n2) et (n3) du générateur sont également variables.

12. Procédé de limitation du courant délivré selon les revendications 10 ou 11, **caractérisé en ce que** les vitesses de rotation (n1, n2, n3) du générateur, en particulier lors de la première montée en régime du générateur, sont déterminées ou sont apportées par une logique et par l'intermédiaire d'une interface en particulier à un appareil de commande et sont écrites dans une mémoire.

13. Procédé de limitation du courant délivré selon l'une des revendications précédentes, **caractérisé en ce que** des informations peuvent être échangées dans les deux directions entre le régulateur de tension et un appareil de commande, en particulier la commande du moteur.

14. Procédé de limitation du courant délivré selon l'une des revendications précédentes, **caractérisé en ce que** la machine est conçue en tenant compte de la limite supérieure du courant délivré (IGmax).

15. Procédé de limitation du courant délivré selon l'une des revendications précédentes, **caractérisé en ce que** la limitation du courant du générateur hors force est imposée ou est augmentée d'un niveau prédéterminé si une valeur minimale de tension du générateur est atteinte ou n'est pas atteinte.

16. Procédé de limitation du courant délivré selon l'une des revendications précédentes, **caractérisé en ce que** la valeur de consigne du courant maximum admissible délivré par le générateur est réduite à l'aide de valeurs de température déterminées, par le régulateur de tension ou l'appareil de commande.

17. Dispositif de limitation du courant (IG) délivré par une machine électrique dotée d'un enroulement d'excitation, le dispositif étant conçu pour exécuter toutes les étapes d'un procédé selon l'une des revendications 1 à 16.
